# EUROPEAN PATENT APPLICATION

(11) **EP 1 061 739 A2**
(43) Date of publication of application: **20.12.2000**
(21) Application number: 00305061.4
(22) Date of filing: 15.06.2000
(51) Int. Cl.: H04N 5/85, H04N 5/775

(54) **The storage of interactive video programming**

(30) Priority: 17.06.1999 US 335372
(71) Applicant: ACTV, INC., New York, NY 10020 (US)
(72) Inventor: Freeman, Michael J., Kings Point, NY 11024 (US); Liga, Kevin M., Port Chester, NY 10573 (US); Deo, Frank P., Kendall Park, NJ 08824 (US)
(74) Representative: Needle, Jacqueline

(57) **Abstract**

An interactive television system is able to provide an interactive television program having a plurality of video signals related in time and content. The video signals are in a digital format. At a receiving station, a first video signal is selected for display. The system is able to provide a seamless transition when the viewer switches from the display of the first video signal, to the display of a second video signal. Live or pre-recorded programs are stored on an optical disc together with control codes so that on reading the video signals from the optical disc, seamless switching between video signals from the disc, or between video signals from the disc and received from other sources, is enabled. The optical disc may be played by the viewer at his receiving station, or may be played at a central location and the video signals transmitted to receiving stations.

## Description

The present invention relates to a method and system of providing interactive programming at a receiver station.

US-A-3,947,972 discloses the use of a time synchronized multi-track audio tape to store educational conversations. One track is employed to relay educational interrogatories to a user, and the remainder of the tracks, selectable by a switching mechanism, are used to convey responsive messages. Such systems progressed to interactive television, in which multiple broadcast or cable channels are switched in response to user selections to provide interactive operation. US-A-4,847,700 describes an interactive television system in which a common video signal is synched to a plurality of audio channels to provide content related to user selectable responses.

US-A-4,264,925 describes the use of a conventional cable television system to develop an interactive system. US-A-4,602,279 describes the use of a memory to store demographic profiles of television viewers. This information is stored to be recalled later, for example, to provide target specific advertising.

Prior art interactive television systems are generally concerned with providing one signal (i.e. one video signal) per channel, whether the channel is on cable television, broadcast television, or a VCR. Because cable and broadcast television channel capacity is becoming limited as more and more cable channels are being utilized for conventional programming, and interactive systems of the type described require multiple channels, it is desirable to reduce the channel capacity required for such systems while still providing at least the same level of interactivity.

US-A-5,724,091 discloses seamlessly switching between video signals whilst viewing a first video signal, even though the video signal switched to may be on a different broadcast channel, or on the same channel multiplexed with, the currently viewed video signal. However, it has now been identified that there is a need for a less complex method and system for seamlessly switching between digital video signals, for example, for a low cost digital set top environment.

Accordingly to a first aspect of the present invention there is provided a method of providing digital programming at a receiver station, where a plurality of video signals are stored on an optical disc, the method comprising the steps of:
displaying a first video signal;
selecting a second, stored video signal from the optical disc; and
in response to the selection, receiving and displaying the second stored video signal, wherein the transition between the first and second video signals is seamless.

Preferably the first video signal is stored on the optical disc.

In a preferred embodiment, the video signals are stored on the optical disc together with data codes for enabling the seamless switch between the first and second video signals received from the optical disc.

For example, video signals are stored on said optical disc in a digital program stream, and time gaps are created in each of the stored video signals, the time gaps representing switch times and providing time for a seamless switch from one video signal to another.

In this manner, a viewer can be given the capability to switch seamlessly between different video signals retrieved from an optical disc.

In an embodiment, the optical disc is at a location remote from the receiver station, and the method further comprises the step of transmitting video signals stored on said optical disc to the receiving station.

Alternatively, the optical disc is located at the receiver station, and the method further comprises the step of reading the optical disc to retrieve video signals stored thereon.

The present invention also extends to a system for providing digital programming at a receiver station, the receiver station comprising:
receiving means for receiving video signals and converting the received video signals for display;
selection means for indicating a selected video signal to be displayed; and
display means for displaying the selected and converted video signal;
   wherein the system further comprises an optical player for reading an optical disc on which a plurality of video signals are stored, the receiver station being arranged to receive and display video signals from an optical disc upon selection by said selection means,
   and wherein the system is arranged such that the transition between first and second video signals displayed by said display means is seamless.

Preferably, the video signals received from the optical disc each have time gaps therein, the time gaps representing switch times and providing time for a seamless switch from one video signal to another.

In an embodiment, said selection means comprises a processor, connected to the receiving means, and said receiver station further comprises a digital decompressor, operably connected to the processor, for decompressing received, compressed, video signals, wherein said display means is operably connected to the digital decompressor.

The optical disc player may be located remote from the receiver station, and transmission means provided for transmitting video signals read from an optical disc to said receiving means at the receiver station. That is, the video signals on the optical disc can be retrieved at a central location, or headend and then transmitted to a number of viewers.

Alternatively, the optical disc is located at the receiver station.

Embodiments of the invention enable live or pre-recorded programs to be stored on optical discs, such as DVDs, at the time of production or in subsequent edit editions. The stored live or pre-recorded programs may be played back later. Once the program is stored on one or more DVDs, the DVD may be played back at a central location (such as a cable headend) and the multiple audio, video, Html/web links, control codes and/or graphics signals incorporated within the program may be transmitted over appropriate transmission means to any of the receiver stations disclosed herein. Alternatively, the DVDs with embedded programs may be made available to consumers for home use. The material stored on the DVD may contain the ACTV control codes such that any type of receiver station having interactive software, for example, as described herein, would be capable of local play back of the program from the DVD together with its interactive capabilities.

Embodiments of the present invention allow improved performance during switching, making the switches between programs, for example, transparent. This may involve a slight imperceptible delay, during which the previously obtained video information is displayed while the interactive system locates, receives, demultiplexes, decompresses, decodes, and processes the new video signal. This allows the interactive system to switch to the new video signal without flicker or distortion appearing on the TV screen, i.e. a seamless switch.

Different methods to achieve this seamless switching are described. One involves an analog video frame buffer, whilst an alternative uses two tuners. Other alternatives include: (a) using two digital video buffers; (b) using a large memory; (c) using a large buffer in an embodiment similar to that of (b); and (d) switching at the cable headend.

An improved method and system for seamless switching between MPEG compressed digital signals in a digital set top, HDTV or personal computer environment is also described. Whilst the MPEG standard discusses the use of splice points, such points are difficult to insert in video streams which come from different sources, which is the typical cable television environment. This is because streams that have been compressed at separate times may have different clocks and therefore different timing information. By making some modifications on the encode process for the virtual channel applications, enhancements can be made to splicing. Such enhancements include locking the time bases of the multiple channel encoders, genlocking video sources, time synchronizing the start of the encode process, and inserting splice points at the appropriate locations in the GOP.

According to a further aspect of the invention there is provided a method for preparing a plurality of video signals for seamless switching at subscriber reception sites, the method comprising the steps of:
receiving and genlocking a plurality of video signals to create time synchronized video signals;
directing the plurality of video signals into one or more video encoders;
inserting splice points into the plurality of video signals;
time synchronizing the plurality of video encoders, thereby ensuring that the splice points inserted in the video signals occur at a correct frame number; and
forming a digital program stream from the video signals such that time gaps are created in each of the video signals to enable switching from one video signal to another video signal in a seamless manner, the time gaps representing switch times and providing time for a seamless switch from one video signal to another,
and the method further comprising storing said digital program stream on at least one optical disc.

Preferably, the step of forming the digital program stream comprises encoding the video signals at a lower bit rate than channel capacity to create the time gaps.

The present invention also extends to an encoding system for preparing a plurality of video signals for seamless switching at subscriber reception sites, the system comprising:
at least one video genlock device, for receiving and genlocking the plurality of video signals to create time synchronized video signals;
at least one video encoder, connected to the video genlock device, for inserting splice points into the plurality of video signals. and for encoding the plurality of video signals to form a digital program stream, wherein the video encoders are time synchronized;
   wherein the digital video signals are encoded to create time gaps in each of the video signals, the time gaps representing switch times thereby allowing time for a seamless switch from one video signal to another; and
means for preparing the digital program stream for storage on an optical disc.

For example, the system may have, transmission means, operably connected to an optical disc player, for transmitting the plurality of digital program streams read from an optical disc onto a subscriber distribution network selected from the group consisting of cable television, broadcast television, and direct broadcast satellite.

Embodiments of the present invention will hereinafter be described, by way of example, with reference to the accompanying drawings, in which:-
FIGURE 1 is a block diagram of an interactive television system.
FIGURE 2 is a block diagram of an interactive television system in a two-way transmission configuration;
FIGURE 3 is a block diagram of an arrangement to achieve seamless switching between video signals;
FIGURE 4 is a block diagram showing an alternative arrangement to achieve seamless switching between video signals;
FIGURE 5 is a block diagram showing a central programming location;
FIGURE 6 is a block diagram showing video splice points and time gaps in video programming streams;
FIGURE 7 is a block diagram of a reception box;
FIGURE 8 is a block diagram of alternative audio frames;
FIGURE 9 is a block diagram of a TV broadcast station switcher,
FIGURE 10 is a block diagram illustrating non-related program switching;
FIGURE 11 is a block diagram illustrating switching within multiple event programming;
FIGURE 12 is a block diagram of an embodiment for seamless picture-in-picture program switching;
FIGURE 13 is a block diagram illustrating switching within multiple commerce/shopping programming;
FIGURE 14 is a block diagram illustrating digital program insertion - addressable advertising;
FIGURE 15 is a block diagram illustrating seamless switching from a group of signals to other signals at a server;
FIGURE 16a and 16b are block diagrams of an alternative two-tuner arrangement;
FIGURE 17 is a block diagram of an alternative two-tuner arrangement;
FIGURE 18 is a block diagram of an embodiment for storing live or pre-recorded programs on DVD; and
FIGURE 19 shows a block diagram of a receiver station incorporating a DVD player.

In the interactive television system described, a plurality of viewers are simultaneously provided with a plurality of different program information message signals. A plurality of video signals 1 are provided. Video signals 1 may be, for example, various field and/or audio synchronized camera angles of a sporting event, or a game show having a content and host acting responsively to user selections. Alternatively, video signals 1 may be any video signals suitable for interactive conversation, such as those described in U.S. Patents Nos. 4,847,700, 3,947,972, 4,602,279, 4,264,925, or 4,264,924. Various types of time and content related video signals exist which are suitable for interactive operation.

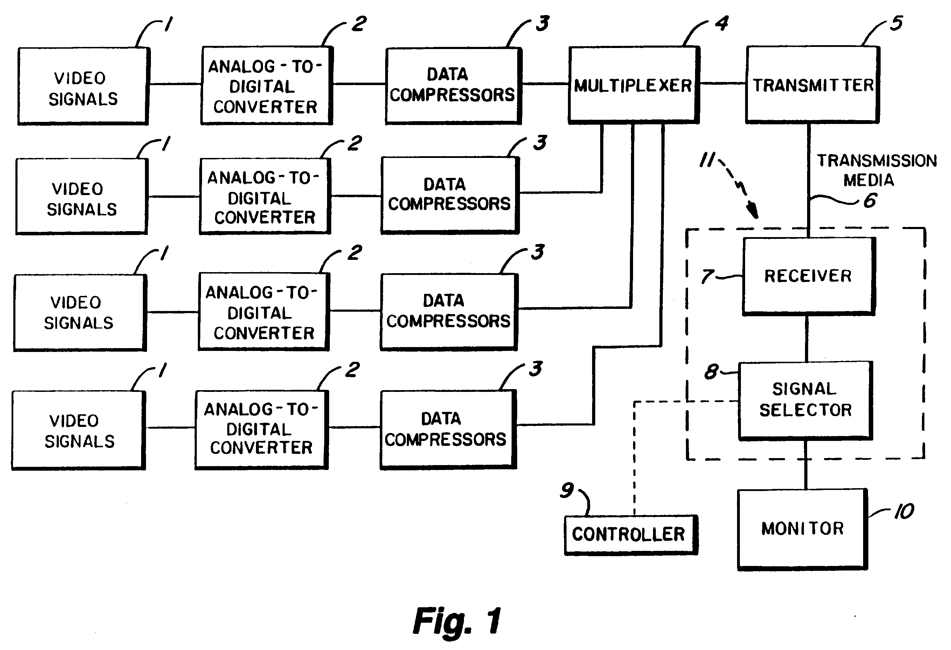

In previous systems, these various signals would be transmitted to a receiver on separate broadcast or cable channels, each requiring a separate 6 MHZ NTSC channel. In the embodiment illustrated in Figure 1, the video signals 1 are directed to analog-to-digital ("A/D") converters 2 which convert the various video signals into digital format for transmission. The A/D converters 1 may be of any suitable type for converting analog signals to digital format. An A/D converter may not be needed for each video signal 1, but rather fewer converters, or even a single converter, may be capable of digitising a plurality of video signals 1. Interactive video programs may also be delivered to a cable or other distribution network in pre-digitized and/or precompressed format.

Digital conversion results in very large amounts of data. It may therefore be desirable to reduce the amount of data to be sent, allowing more signals to be sent over a single transmission channel. For example, a single frame of digitized NTSC video represents over 350 Kbytes of data. Therefore, two hours of standard video is about 80 Gbytes. Since there are 30 frames/sec in such video, the data transfer rate is 22Mbytes/sec. This large amount of data is preferably reduced by digital compression.

Thus, in order to reduce data transfer requirements, the various digital video signals are preferably compressed before transmission. The video may be compressed by any required compression algorithm. The two most common types of currently known compression algorithm are "processor intensive" and "memory intensive".

The processor intensive approach performs compression by eliminating non-changing aspects of a picture from the processing in the frame-to-frame transfer of information, and through other manipulations of picture information involving mathematical computations which determine the degree to which a given motion in a picture is perceptible to the human eye. This approach depends on high-speed processing power at the transmission point.

The memory approach involves division of a picture frame into hundreds of minuscule blocks of pixels, where each block is given a code representing its set of colors and variations in luminance. The code, which is a much smaller increment of information than all the information that would describe a given block of the picture, is transmitted to the receiver. There, it calls up the identically coded block from a library of blocks stored in the memory of the receiver.

Thus, the bit stream represents a much smaller portion of the picture information in this approach. This system is generally limited by the variety of picture blocks which may be stored in the receiver, which relates directly to memory size and processor power.

Examples of commonly known compression techniques which my be used with embodiments of the invention are JPEG, MPEG1 and MPEG2.

Data compressors 3 receive the digital data from the A/D converters 2 and reduce the data for each video signal which is to be transmitted. The data compressors 3 may be of any appropriate type, and, for example, may be conventional data compressors for compressing video images by the known techniques described above. Compression of the various video signals may be done with fewer data compressors 3 than one compressor per video signal. In a conventional analog NTSC system, by way of example, it is customary to transmit one video signal per 6 MHZ channel. By digitising the video signal, it is possible to send a data stream containing more than one video signal in one channel. Compressing the digitized signals, allows even more video signals to be transmitted over a single transmission channel. The number of signals which may be sent over a single channel is generally related to: a) the type of video being sent; b) the video compression scheme in use; c) the processor used and the memory power; and d) the bandwidth of the transmission channel.

Compression techniques exploit the fact that in moving images there is very little change from frame-to-frame. Editing out the redundancies between frames and coding just the changes allows much higher compression rates. The type of video which normally contains a great deal of high-speed movement, such as occurs at living sporting events, will, therefore, have the lowest compression rates. Movies, on the other hand, which normally have a lower frame rate and less frame-to-frame change than a live sporting event will achieve higher compression rates. Currently, commonly known compression schemes have compression rates that vary from 2:1 to 10:1 for satellites, and 2:1 to 5:1 for cable television systems, depending on the degree of motion.

Once the various video signals 1 have been digitized and compressed, a multiplexer 4 combines the various digital signals into a reduced number of transmission data streams for transmission. For example, if 68 NTSC channels are available, and each channel is capable of transmitting either 4 digitized, compressed slow moving video signals (e.g. movies) or 2 digitized, compressed, high-speed video signals (e.g. sports), then the various NTSC channels should be allocated in a predetermined fashion to maximize the number of simultaneously transmittable signals.

As an example, the broadcast frequency corresponding to a first NTSC channel may contain a data stream of separate digitally compressed non-interactive movies. On this frequency, the data stream would contain video signals representing a number of movies. However, the video signals, unlike those of an interactive program, are not related in time and content. The frequency corresponding to a second channel might contain a digital data stream of an interactive sports program, consisting of two multiplexed compressed high-speed video signals that are preferably related in time and content. The frequency corresponding to a third channel might contain a digital data stream of an interactive movie consisting of four multiplexed compressed video signals which are related in time and content. The frequency corresponding to a fourth channel might contain an analog NTSC signal relating to local programming. Therefore, four NTSC channels may contain a channel of multiplexed movies, an interactive sports program, an interactive movie, and local programming.

Multiplexer 4 receives the incoming compressed, digitized video signals and in a predetermined manner, in conjunction with transmitter 5, multiplexes the desired video signal onto the desired channels, and transmits these signals. In the embodiments described, the transmission is over NTSC channels, and certain NTSC channels may contain only one video or other signal, in analog or digital form.

It will be appreciated that the system to which the video channels conform may be chosen as required, and is not limited to NTSC. However, for ease of explanation, the invention is described herein with reference to the NTSC system.

As indicated earlier, the number of video signals which may be multiplexed onto a data stream on a single transmission channel may vary. Also, the number of channels which use data streams may vary. The transmission data streams are transmitted by transmitter 5 via transmission media 6 to a receiving station 11 having a receiver 7. The transmitter 5, media 6, and receiver 7 may be any appropriate means for transmitting digital video signals including broadcast television, cable television, direct broadcast satellite, fibre optic, or any other transmission means.

The transmission means may also be a telephone system transmitting a digital video data stream. Thus, a multiplexed data stream containing several broadcast channels or an interactive program with related video signals may be sent directly to a user over a single telephone line. The digital transmission devices may also include means for transmitting analog signals.

In one embodiment, the digital transmission signal is transmitted using a cable television system. Receiver 7 receives various NTSC channels, some or all containing multiplexed or non-multiplexed digital video signals. Ordinarily, more than one channel will be transmitted by transmitter 5 and received by receiver 7 as in an ordinary cable television system. However, each of the different channels may have a data stream containing several digitized video signals thereon. Therefore, receiver 7 preferably operates in conjunction with a signal selector 8 to select a particular NTSC channel for playback, then to select a particular video signal from the data stream's multiplexed signal, and finally to uncompress or expand the compressed video signal, if necessary, for playback by way of monitor 10.

A multiple choice controller 9 operates to control the receiver 7 and the signal selector 8 to select a particular video signal for playback. In practice, a user need not know that multiple signals per channel are in use. If, for example, 68 channels with 4 signals-per-channel were in use, controller 9, in conjunction with receiver 7 and signal selector 8 might be programmed to represent these channels to the user as channels 12 to 72. The monitor 10 may be, for example, a television set. The signal selector 8 preferably includes a demultiplexer for selecting a particular video signal from the data stream on the channel currently being received by receiver 7. Signal selector 8 further includes the necessary un-compression or expansion apparatus corresponding with the compression scheme in use by compressors 3.

In practice, an interactive sporting event program might be transmitted on a 6MHZ cable television signal using a compression-multiplexing scheme which allows two sports video signals (A and B, for example) to be transmitted over a single NTSC channel (channel 34, for example). It might be desired to have four video signals (A-D, for example) for the particular interactive sporting event. A first video signal (signal A) may contain the standard broadcast signal of the game; the second video signal (signal B) may contain a dose-up view of the game action; a third video signal (signal C) may contain a continuously updated replay of game highlights; the fourth video signal (signal D) may contain statistical information. These four video signals (A-D) may, for example, be multiplexed as follows: video signals A and B multiplexed onto a data stream transmitted on cable channel 34; video signals C and D multiplexed onto data stream transmitted on cable channel 35. Alternatively, all four video signals (A-D) could be multiplexed into one data stream carried on one frequency channel. These four signals may, however, be mapped by controller 9, or signal selector 8, to play as separate channel displays for the user which, when the viewer makes choices on the multiple choice controller, a seamless switch occurs therebetween. Each video signal of this interactive program may include a label which reads, for example, "Full-Screen Action - Press A: Close-up Action - Press B: Replay - Press C: Statistics - Press D."

If more signals were needed for an interactive program than were mappable to a data stream on a single channel, signal selector 8 in conjunction with receiver 7 may be programmed to switch between the various video signals 1 as well as the various broadcast channels to provide the necessary level of interactivity. However, preferably all the various video signals associated with a particular interactive program are multiplexed onto a single channel.

Additionally, the signal selector 8 may store information relating to current and previous user responses. For example, the personal profile of the viewer or previous response patterns of the viewer may be stored in memory. This information may be used in conjunction with commands transmitted within the video signals, for example, as discussed in US Patent No. 4,602,279. The stored personal profile information and received commands may be used to switch interactively between data streams and video signals without any additional response from the user.

The multiplexed interactive program may be transmitted over a single telephone line, if desired. In this embodiment, multiple choice controller 9 is programmed to switch between the various signals on the single telephone line. If additional channels were desired, a two-way configuration is used as described below.

Embodiments of the invention may be used in an educational embodiment. For example, information may be stored on each data stream in a plurality of reproducible information segments, each of which comprises a complete message reproducible by the receiver directly in response to the selection of the video signal by signal selector 8 responsive to a user selection on multiple choice controller 9. Each of the information segments in the various data streams contain interrogatory messages with associated multiple choice responses, responsive messages, informational messages, or combinations thereof.

The various information segments in the various data streams preferably relate in real-time and content so that an interactive conversation may occur as the video signals are displayed and the user responds to the various interrogatories contained in the video signals. As a user answers a particular interrogatory with a multiple choice response, the information in the video signal associated with the particular selection is displayed by the signal selector 8. The various interrogatories, responsive messages, and informational messages may generally be contained in any one, more than one or all of the various video signals.

The use of a data stream containing multiple video signals per broadcast channel may be used for many types of interactive programs, such as those described in the US patents referred to above. Other interactive programs may also be developed.

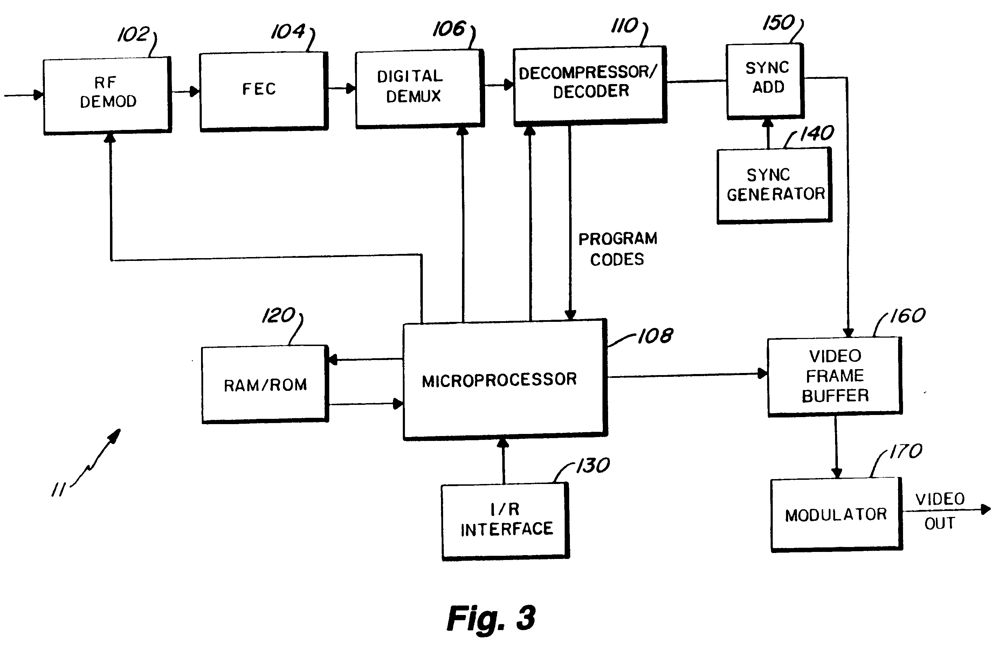

A stand-alone system which has no need of transmission means may alternatively be provided. In this embodiment, the digitized video signals that make up an interactive program are stored in local storage means such as video tape, video disk, memory (e.g. RAM, ROM, EPROM, etc) or in a computer. Preferably, the digital video signals are multiplexed onto a standard format signal, such as a NTSC signal. The particular storage means may be connected to any of the interactive boxes disclosed in Figures 3 to 5, and described below. The interactive boxes may then be connected to a television set. Alternatively, the circuitry in Figures 3 to 5 may be implemented on a board and inserted into a standard personal computer (PC). A separate processor on the interactive board is not necessary for this configuration since the standard PC processor performs the functions of the processor 108 shown in Figures 3 to 5.

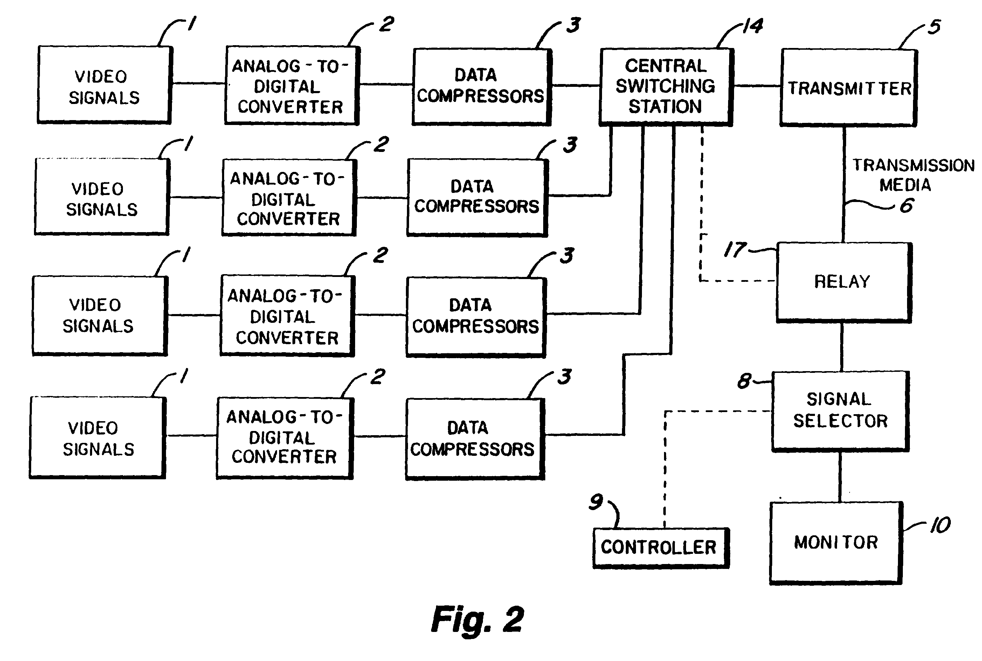

As shown in Figure 2, the interactive television system may be operated in a two-way configuration. In this mode, the various video signals 1 are processed as previously described, being digitized by A/D converters 2 and compressed by video compressors 3. The signals are then routed to a central switching station 14. In this embodiment, the switching between the various video signals is accomplished at the head end rather than at the receiver. Multiple choice control unit 9, which may be a wireless controller, relays the multiple choice selections of the user through a relay box 17 back to the remotely located switching station 14. The multiple choice selections may be relayed by relay box 17 to the switching station by any conventional means, such as two-way cable television, telephone, or FM transmission. Switching station 14 receives the multiple choice selection of the user and routes the desired signal to transmitter 5 which transmits the desired video signal down the appropriate cable channel for the particular user. If desired, transmitter 5 may also transfer programming on the cable television channels which is not being used for interactive programming. Alternatively, switching station 14 may include multiplexing equipment as previously described, and thus operate multiple interactive or noninteractive programs over a single television channel.

For example, if it were desired to implement the interactive football game program as previously described, a single NTSC cable channel may be allocated for the program. However, in this instance, the video signals would be present at the transmitting end. In response to a signal from the controller 9, a signal is sent by relay box 17 to the cable TV switching station which routes the desired video signal to the requesting viewer. Such a system requires very fast switching equipment, but can be implemented using digital imagery.

Alternatively, it may be desirable to transmit the interactive sporting event over a single telephone line. When the user enters a selection on controller 9, a signal is sent via the telephone line to the central switching station which routes the desired signal of the interactive program over the user's telephone line so that a single link handles both the interactive choice being made at the receiver and the transmission of that choice, out of a plurality of choices, from the head end where the actual switching takes place in response to the interactive selection made at the receiver.

The two-way link between the user and the switching station may be used for other purposes. For example, demographic data may be transferred from the user to the broadcast network for commercial purposes, such as targeted advertising, billing, sending a game show winner a winning number for pickup of a prize, or other commercial or non-commercial purposes.

Compression systems generally perform less efficiently when frame-to-frame content includes many changes in pixel content (e.g. during fast motion or scenery changes). The system may be advantageously programmed to ease the processing burden on the uncompression progam. When a key on the controller 9 is depressed to select a desired signal, a slight imperceptible delay may be effectuated if desired. This delay allows the uncompression or expansion algorithm a short period of time to adjust to the rapid change from one video signal to another which ordinarily causes a degradation in the efficiency of the algorithm causing video glitches to appear on the screen display.

Figures 3, 4, 7, 16 and 17 show embodiments of a receiving station arranged to enable seamless flicker-free transparent switching between digital video signals on the same channel or different channels. The receiving stations illustrated may be connected to any transmission media or simply connected to the output of any stand-alone storage means for the digitized multiplexed interactive program. As indicated in Figure 1, for example, the receiving station may be incorporated in an interactive program box 11, which connects to a television or other display monitor, and comprises the receiver 7 and the signal selector 8. Alternatively, the required functionality of the receiver 7, the signal selector 8 and the monitor may be combined in a personal computer. For example, to provide this capability, an RF demodulator board, a digital demultiplexer, decompressor(s), frame buffer(s), and sync components may be added to a personal computer. These items, and any other components, may be connected to the PC processor and storage elements as shown in Figures 3, 4, 7, 16 and 17. In this case, the user may make selections via the computer keyboard.

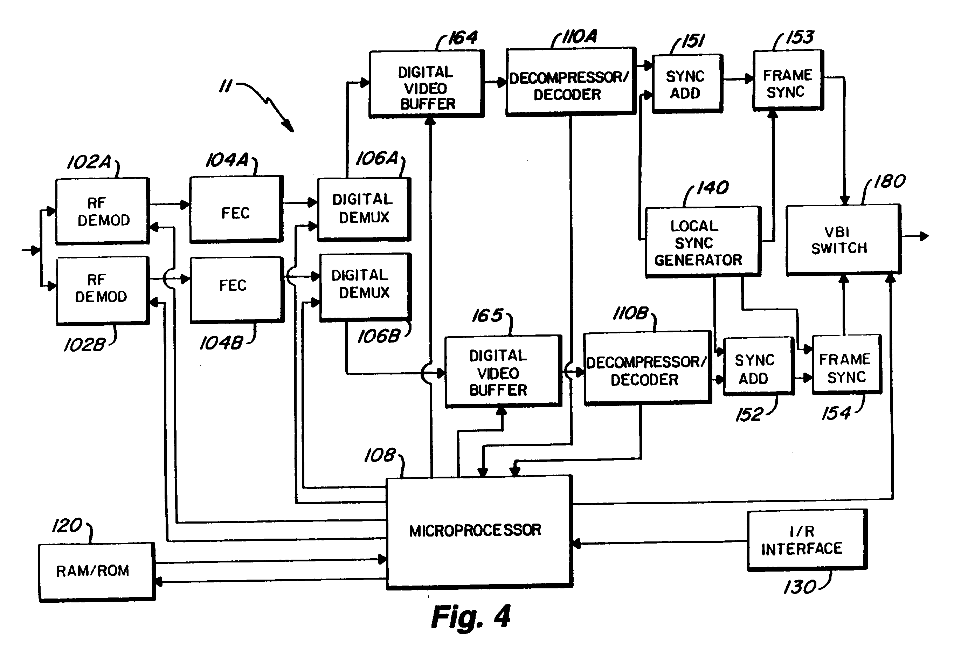

Figure 3 shows an embodiment of a receiving station 11 having a single analog frame buffer, whilst Figure 4 shows an arrangement with pairs of RF demodulators, error correctors, and demultiplexers and/or a pair of digital video buffers, as described below.

The embodiment illustrated in Figure 3 provides a seamless video switch between two or more separate digital video signals and comprises a microprocessor 108 connected to an RF demodulator 102 and a digital demultiplexer 106. The microprocessor 108 directs demodulation and demultiplexing of the proper channel and data stream to obtain the correct video signal. The proper channel is determined either by examination of the user's input from a user interface 130 and/or from any other information or criteria (such as personal profile information) stored in memory 120. For example, the memory, which is preferably RAM/ROM 120, may store commands provided within the video signals as described in US Patent No. 4,602,279. The user interface 130 may be an infrared, wireless, or wired receiver that receives information from multiple choice control unit 9.

The RF demodulator 102 is part of the receiver 7, and demodulates data from the broadcast channel directed by the microprocessor 108. After the data stream is demodulated, it passes through a forward error correction circuit 104 into the digital demultiplexer 106. The demultiplexer 106 is controlled by the microprocessor 108 to provide specific video, audio and data signals out of a number of video, audio and data signals located within the data stream and to steer the specific signals to the appropriate device for use within the system. In order to seamlessly splice from one video stream to the other it is preferred to perform the switch in the digitally compressed domain thereby eliminating the need to decode two video, audio and data streams at the same time.

When the compressed digital video is sent to the video decode function, it is first stored in a buffer 160 until there is enough information buffered to ensure continuous playback of the video stream. Because of the compressed nature of the video information, a relatively small buffer 160 can hold a significant amount of video information (on the average of five to six frames). This means that there is a significant delay from the time the compressed video is received to the time it is decompressed and played out. Therefore, the preferred method for switching in the set top would be to select the new video on the way into the video buffer 160 while continuing to play out the old video to the monitor. Because the incoming stream has been created by producing syntactically correct MPEG segments that are sliceable, this can be achieved easily. By this method there is no need for additional hardware in the receiver. A video always appears to the viewer to be a single video stream with no repeated or dropped frames.

MPEG allows for the reconstruction of the video clock at the receiving station 11 through the use of a data field called the PCR (Program Clock Reference). This is necessary to ensure that the decoder can play out the decoded video at the same rate as it was input to avoid dropping or repeating frames. Additional embedded information in the MPEG stream includes the PTS (presentation time stamp) and DTS Display Time Stamp. These signals are used to maintain lip sychnronization with the audio and also to inform the receiver when to present the video and audio to the display.

Figure 4 shows an alternate, dual tuner embodiment of a receiving station 11 providing seamless switching between separate video signals. In this embodiment, the microprocessor 108 controls the selection of the RF channel that is demodulated by RE demodulators 102A, and 102B. The demodulated data streams enter the forward error correctors 104A. 104B. At the output of the forward error correctors, the data streams are transmitted to the input of the digital demultiplexers 106A, 106B.

As with the RF demodulators 102A, 102B, the digital demultiplexers 106A, 106B are controlled by the microprocessor 108. This configuration allows the microprocessor 108 to independently select two different individual time-multiplexed video signals on different channels and data streams. If all the video signals of an interactive program were contained on a single channel or data stream, it would only be necessary to have a single RF demodulator, forward error corrector, and digital demultiplexer serially connected and feeding into the two digital video buffers.

Two data streams are provided from the digital demultiplexers 106A and 106B. The outputs of the demultiplexers contain a multiplicity of video, audio and data that can now be directed to the appropriate device under the control of the microprocessor 108. In this way it is no longer necessary to have all of the information contained in one RF channel. Instead the information can be found at different frequencies in the RF spectrum and it is still possible to splice among the streams. By placing a simple digital switch at the output of the two demultiplexers duplication of the entire decode chain is avoided. However, it should be noted that this is only a cost saving approach and duplication of the rest of the chain would work as well.

A standard MPEG stream contains different types of encoded frames. There are I frames (Intercoded), P frames (Predicted) and B frames (Bi-directionally predicted). A standard MPEG structure is known as GOP (group of pictures). GOP's usually start with I frames and can end with P or B frames. There is generally only one I frame per GOP, but many P and B frames. Whilst it is not necessary to have any I frames, they are useful for many reasons.

GOP's that end with B frames are considered open. GOP's that end with P frames are considered closed. It is presently preferred to use closed GOP's with the illustrated embodiments to ensure that there are no motion vectors pointing to frames that are outside of the current GOP.

MPEG also reorders the video frames from their original display order during the encode process in order to code the video more efficiently. This reorder must be undone in the decoder in order for the video to present property.

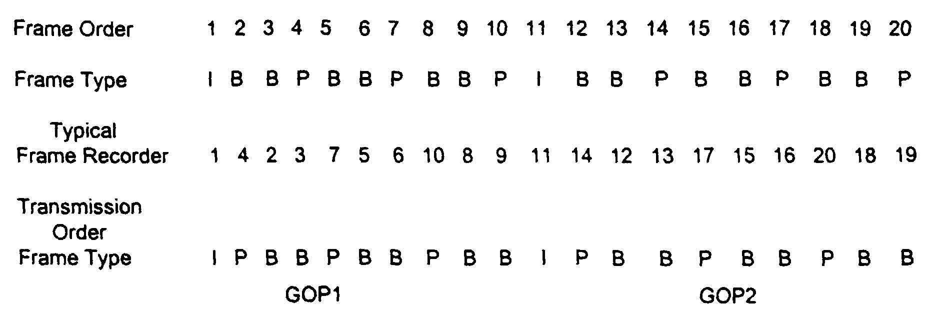

Splices occur at the end of the B frame at the end of GOP1 prior to the I frame of GOP2. It is important to point out that with appropriate controls the encoder can code with variable GOP length and place splice frames accurately to achieve the desired interactive effect. If the content is unrelated then the encoder can splice at the end of every GOP allowing for multiplicity of switching opportunities. Because the GOP ends on a P frame, a closed GOP is yielded.

It will be apparent that the reception units described above perform seamless switching. However, seamless video switching at the reception units may be enhanced by modifying the encoding process.

As explained above, seamless switching is required between digital video signals, whether they represent independent television programs or different related signals within one interactive program. Seamless switching is defined as video stream switching that does not produce visible artifacts. The effect of the encoding process is to simplify and enhance the seamless switching process.

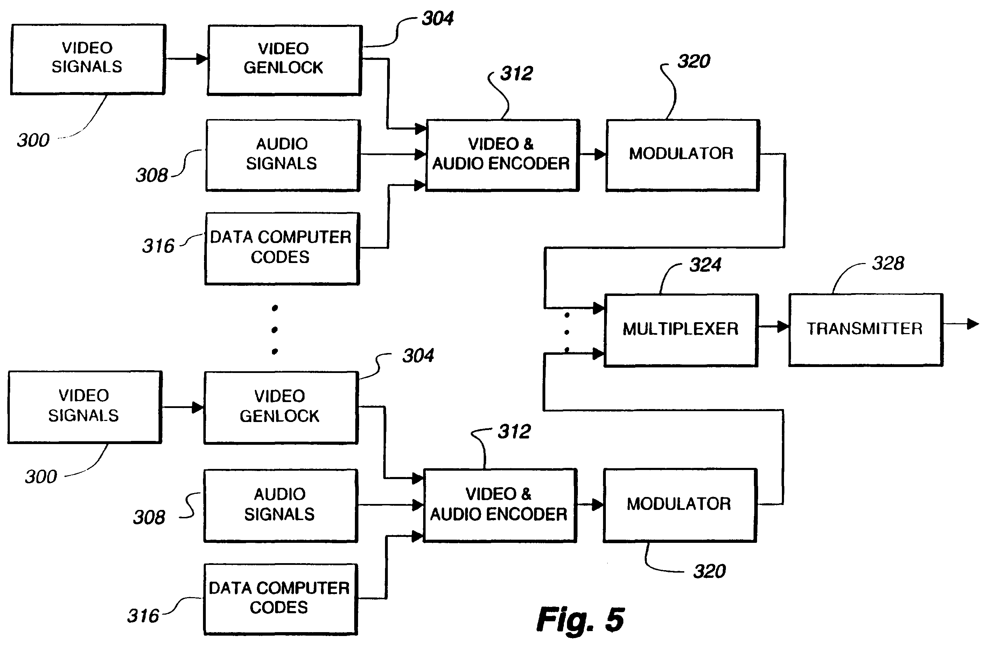

The encoding process may be performed at a central location, as illustrated in Figure 5. As seen in Figure 5, a plurality of video signals 300 are shown which may comprise live or prerecorded video streams. The video signals may originate from cameras for live video, video servers, video tape decks, DVD, satellite feed, etc. The video signals may be in MPEG format, HDTV, PAL, etc. A plurality of audio signals 308 may originate from CD, tape, microphones, etc.

The data codes, shown emanating from a data code computer 316 in Figure 5, are the interactive commands for interactive processing which may be used by a set top converter as described above. Preferably, the data codes are part of an interactive scripting language, such as the ACTV scripting language, originating in the coding computer 316. The data codes are also forwarded to the encoder 312. These data codes facilitate the multiple interactive programming options at the reception units. In this embodiment, a data channel is provided for enabling a synchronous switch between a first video stream and a second video stream. This data channel comprises the codes which link together the different program elements and information segments on the different video signals.

The plurality of video signals 300 are genlocked in a video genlock device 304 and are thus time synchronized. The time synchronized video signals are directed into the video and audio encoder 312. In the preferred embodiment, compatible encoders 312 are required at the cable headend to work with the digital reception units at the remote sites. The interactive applications are preferably facilitated by synchronizing the commands at the headend to a specific video frame and a specific audio frame. This level of synchronization is achievable within the syntax of the MPEG-2, 4 or 7 specifications.

In order to facilitate the seamless switch at the reception sites, the video encoders 312 are preferably time synchronized. This synchronized start is necessary to ensure that the splice points that have been placed in the video content occur at the correct frame number. Whilst it is not necessary to obtain this level of accuracy for all program types, it is achievable in this manner. This provides content producers with the ability to plan video switch occurrences on a frame boundary within the resolution of the Group of Pictures (GOP). SMPTE time code or Vertical Time Code (VTC) information can be used to synchronize the encoders 312. Additionally, a splice can be placed accurately at any frame by utilizing the variable length GOP. Upon command from an external controlling device such as the ACTV command code computer 316, the encoder 312 may be directed to insert a splice at a frame number. Making encoder modifications at the headend ensures more effective seamless switching at the set top converters.

As shown in Figure 5, multiple video signals 300, data codes 316 and audio signals 308 are input into the encoder 312. In an embodiment, four video channels are input into the encoder 312. However, more or less video streams may be input based on the content that is to be delivered. In the current environment, practical limitations for the number of videos are based on picture quality. Ultimately, however, there will be no limit to the number of videos and audios that can be contained within a single channel. Further, all current limitations can be removed through the use of an alternate embodiment utilizing a two tuner implementation.

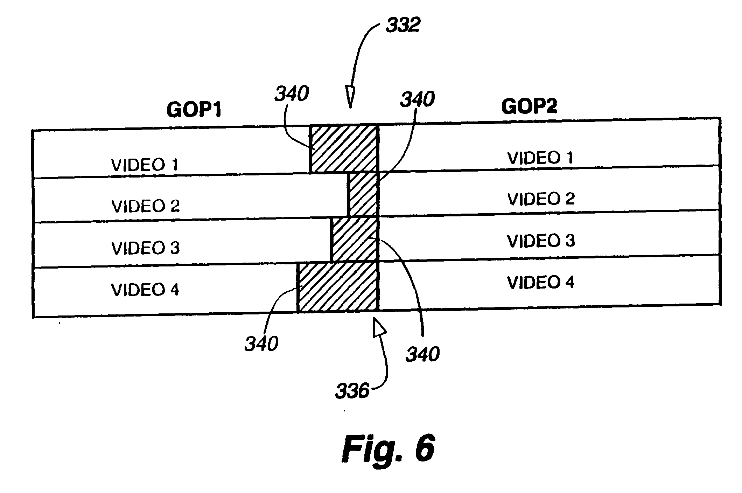

Preferably, the encoder 312 uses a standard MEPG-2 compression format. However, MPEG-4 and MPEG-7 as well as other compression formats, such as wavletts and fractles could be utilized for compression. These techniques are compatible with the existing ATSC and DVB standards for digital video systems. Certain modifications, however, are made to the MPEG stream in order to facilitate the preferred seamless switching at the set top box. These modifications to the encoding scheme are described below with reference to the video frame structure 332 shown in Figure 6.

Switches at the remote reception sites will occur at the video splice point 336. Program switching is facilitated through the provision of splice points. The splice points are identified within the program stream via the adaptation field data. Program switching occurs at these points based on user inputs, personal profile information stored in memory at either the set top converter or the headend, and commands from the program source.

With respect to creation of the video splice point 336, the video encoder inserts splice points at every Group of Pictures (GOP), as shown in Figure 6. A GOP generally consists of one I frame and a series of P and B frames, based on parameters set within the MPEG scheme. Preferably, the GOP is encoded as a "closed" GOP structure, which means that the GOP concludes on a P frame. Therefore, no motion vectors to the next GOP are present. If motion vectors cross from one GOP to the next GOP, artifacts are created which may be visible when the screen is switched. Thus, a closed GOP structure is generally necessary for compliance with MPEG syntax and to ensure the absence of visible artifacts after execution of the splice.

The GOP length is programmable and can be within 1 to infinite frames of video. It is preferred, however, that the GOP comprise 10-15 video frames. Referring to Figure 6, four video signals are shown. It is desired that a seamless switch be made from any video signal to any other video signal.

As shown in Figure 6, seamless video switching occurs on a GOP video-frame boundary. For pre-recorded material, splice points need to be identified for switch points. For programming where "free" channel selection is required (e.g. sports), all GOP boundaries are encoded as slice points. While the switch must appear seamless, it need not occur immediately. For example, a command or key input requires a finite time for processing. Therefore, a video switch may be delayed by up to 1.5 GOP's.

As shown in Figure 6, splices take advantage of the non real time nature of MPEG data during transmission through the digital channel to create a time gap 340 in which the decoder can be switched from decoding one stream to decoding the other during the gap 340. Thus, the gaps 340 shown in Figure 6 represent the switch times. The key is that the most complex video is completed and through the channel before the first packet of the next GOP is through the channel. By encoding at a lower bit rate than the channel capacity, some extra time is created at the end of the GOP in order to switch. In this way, two MPEG streams are merged to create a single syntactical correct MPEG data stream. These gaps can be created at the encoder 312, shown in Figure 5, using any compression scheme.

The audio signals, preferably , are encoded using the AC3 format. The present invention, however, covers any appropriate audio encoding scheme.

All of the various video, audio and data signals are digitized and combined in the encoder 312, in Figure 5. Preferably, the compressed and encoded signal is output in DS3, Digital High Speed Expansion Interface (DHEI) or any other format. The data type is not important, it is just data. The encode process then outputs a digital data stream at the appropriate bit rate for the target channel.

The modulator 320 may utilize one of several different possible modulation schemes. Preferably, 64-QAM is chosen as the modulation scheme. If so, the data rate at the output of the modulator 320 is around 29.26 Mbps. However, any of the following modulation schemes, with respective approximate data rates, or any other appropriate modulation scheme (such as FSK, n-PSK, etc) may be used.

| Modulation Scheme | Rate |
|---|---|
| 64-QAM | 29.96 Mbps |
| 256-QAM | 40 Mbps |
| 8 VSB | 19.3 Mbps |
| 64 QAM PAL | 42 Mbps |
| 256 QAM PAL | 56 Mbps |

Separate NTSC channels are then combined in a conventional combiner, preferably using frequency modulation. Thus, seamless switching at the set top converters can occur from one signal to another within one NTSC channel or from one NTSC channel to another NTSC channel, as discussed below.

In summary, seamless switching at the decoder is facilitated at the encoder 312 by time synchronizing the signals, time locking the encoders and creating a time gap 340 to each of the digital video streams (which represents the difference between the encode rate and the channel capacity) to GOPs, defined below.

After encoding, modulation and multiplexing, the signals can be transmitted to reception sites via satellite, wireless, land line, broadcast, or any other appropriate transmission system. In the preferred embodiment, the signals are distributed to remote sites via cable or other transmission media.

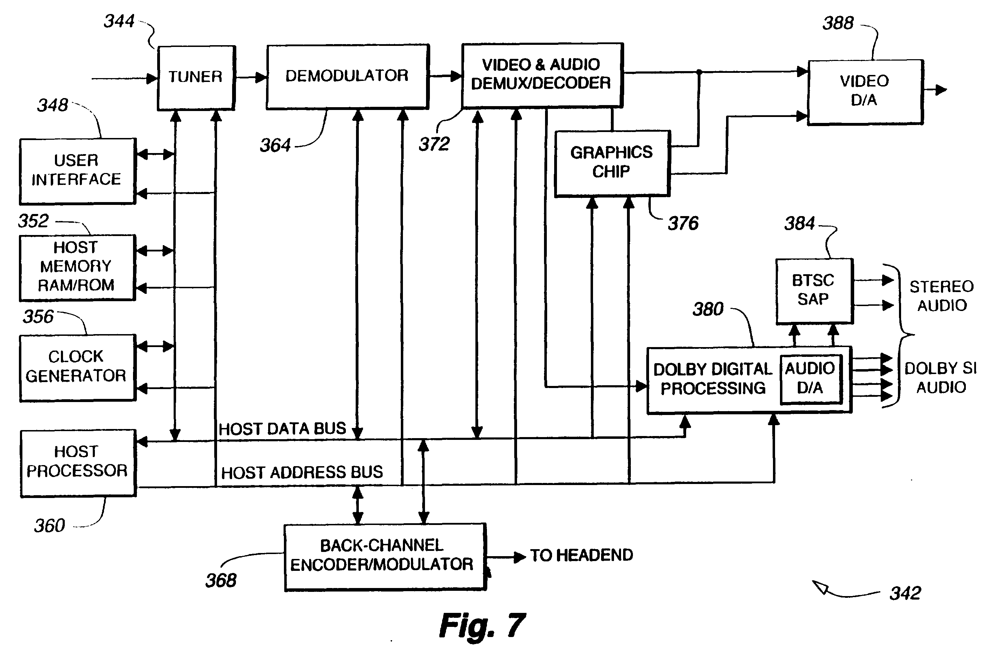

Figure 7 shows an embodiment of a reception unit 342 at which the signal is received via a tuner mechanism 344. The tuner 344 may be a wide band tuner, in the case of satellite distribution, a narrow band tuner for standard MPEG signals, or two or more tuners for seamlessly switching between different signals located in different frequency channels, as explained below. In the case of MPEG signals, the tuner 344 tunes to the particular NTSC channel indicated from command by the host processor 360. The host processor 360 is preferably a Motorola 68331 processor, but may be any appropriate processor including PowerPC, Intel Pentium, etc.

The signal is then forwarded to the demodulator 364. The demodulator 364 demodulates the combined signal, strips off the FEC and forwards the digital signals to the video and audio decoder 372. At the digital decoder 372, the signals are separated and decompressed. The decoder 372 strips off the program identification number (PID), and routes these PIDS to the appropriate decoder, whether video, data, audio or graphics. The audio is preferably forwarded to the Dolby digital processing IC 380. The selected video and audio is then decoded, as explained below, and the video is sent to the video digital-to-analog (D/A) converter 388 which prepares the selected video for display.

A phase lock loop (PLL) recovers the encode clock, which was encoded in the PCR portion of the MPEG adaptation field. Preferably, a ROM holds the operating system for the reception unit 342 and is backed up with Flash-ROM to allow for downloadable code. Further, there are memory devices connected to the decoders 372, 380 and graphic chip 376, which are used to store graphics overlays, for example. Furthermore, profile data for various users in the home can be stored in nonvolatile memory as RAM/ROM or Flash-ROM.

A backchannel encoder and modulator 368 are present for sending data back to the headend. Such data may comprise personal profile information, interactive selections, demographic data for targeted advertising purposes, game show scores, etc.

Further, the reception unit 342 permits new software applications to be downloaded to the unit. These applications may control the unit and redefine the functionality of the units within the constraints of the hardware. Such control can be quite extensive, including control of the front-panel display, the on-screen display, all input and output ports, the MPEG Decoder, the RF tuner, graphics chip and the mapping of the IR remote functions.

Preferably, the interactive programming technology, including providing for multiple camera angles, individualized advertising, etc., is implemented as a software application within the reception unit 342. Such technology is preferably located within the memory 352 of the reception unit. The interactive technology, however, may alternatively be located in any type of memory device including RAM, EPROM, EEPROM, PROM, etc. As such, the software shall have access and control over the hardware elements of the device. Preferably, no additional hardware is required for full use of the interactive programming technology within the reception unit 342 to achieve the performance described.

Any type of control device 348 may be used with the reception unit 342. Preferably, the control device 348 operates remotely and may be an infrared (IR) device having four or more option buttons and incorporating their associated IR codes.

Seamless video switching at the reception unit 342 is described below. The reception unit 342 shown in Figure 7 preferably is capable of real-time MPEG-2, MPEG-4 or MPEG-7 decoding. The reception unit 342 monitors user interactions and information transmitted from the program source and seamlessly switches video and audio streams as appropriate.

Based upon the viewer's responses and requests, the unit automatically and seamlessly switches between video, graphics and audio programming sequences reflecting the viewer's earlier responses. The interactive technology permits a high level of interactivity whilst not requiring the set top unit 342 to transmit any information back to the programming source.

In the video decoder 372, shown in Figure 7, the header data is stripped off the MPEG stream. The particular video is then selected based on a command from the host processor 360. The associated audio is sent to the audio decoder portion 380. The selected video is buffered in a standard video buffer and then output for decoding. The physical buffer size is defined by the MPEG standard. Enough time must be allowed at the initial onset of decoding to fill up the buffer with I-frame and other data.

After buffering, the selected video goes through various steps of an MPEG decode process, which preferably utilizes a variable length decode (VLD). Generally, the variable length decode converts the run-length encoded datastream and converts it into its longer bitstream format. The bitstream is decoded into its constituent parts i.e. motion vectors, dct coefficients and the like so that the video can be reconstructed. Subsequently, the datastream is converted into frequency domain information using an inverse Discrete Code Transform DCT filter. If the frames are intercoded, the pixel data is generated and stored in a buffer.

Referring to Figure 7, the seamless switch from one to another MPEG video stream is explained. Switches will occur on video splice points, as shown in Figure 6. When the demux/decoder 372 in Figure 7 sees the splice point, it switches to the selected video signal which is sent to the buffer. Thus, prior to the switch, the first video signal frames are still being buffered. The next signal PID is loaded into the decoder 372 from the host processor 360. In order to accomplish a switch to one of the four video streams, the video decoder 372, shown in Figure 7, must identify the PID number of the new video stream. Further, it is preferred that each incoming video and audio stream shall have its own PID, known to the interactive application stored in memory at the set top converter 342, in order to facilitate seamless switching among the independent video and audio streams. It must then call the routine that performs the switch. This next PID, identifying the next selected video signal, may be based on user selection, or by way of the interactive control codes, or both. Once the next PID is loaded, the decoder 372 begins to look for the selected video stream and, because of the gap 340 created in the video datastream, the decoder 372 will always find the header information of the next video. Once the splice point indicator of the first video is seen by the decoder 372 and the second video signal is identified by the decoder 372, the second compressed video signal begins to load into the buffer as the first video signal continues to play out. The new video signal is selected based on either user selection or based on an interactive control code.

The splice point counter and a splice point flag are placed in the adaptation field of the MPEG video streams. The splice point counter indicates the number of video packets prior to the splice point. The splice point flag indicates that the splice count is present in the stream. Once the decoder 372 determines the splice point, it can begin buffering the next video stream and continue decompressing the signal as if it were one MPEG stream.

As with the video streams, preferably four AC-3 audio streams, each of which is identified by a unique PID, exist per service. PID numbers are obtained from the MPEG-2 transport table such as SI, PG, and PM at the invocation of the interactive service. One of these PIDs is selected as the default audio channel and is selected upon acquisition of a service. The remaining three channels are optional and are selected by the control program based on control messages and/or user input. While audio channels normally switch with the associated video channel, they may also be switched independently.

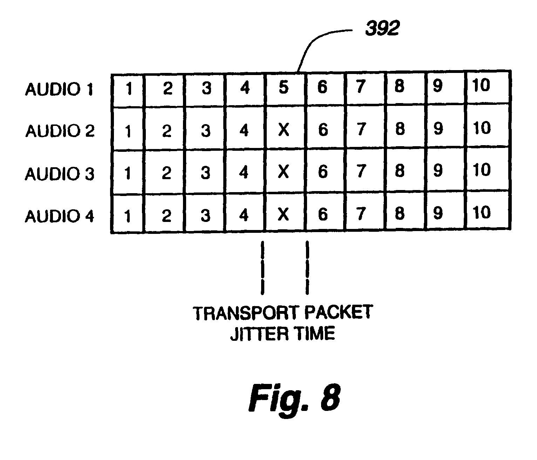

Preferably, switching occurs on frame boundaries, as shown in the digital frame representation 392 of four audio streams of Figure 8. When switching from one channel to another, one frame may be dropped (in this case, frame 5), and the audio resumes with frame 6 of the new channel. The audio decoder 380 is capable of audio switching by provision of the insert of the audio splice points at the encoder 312, shown in Figure 5. Preferably, the encoder 312 inserts an appropriate value in the splice countdown slot of the adaptation field of the current audio frame.

When the audio decoder 380 detects this splice point the decoder 380 may switch audio channels. Although the audio splice is not seamless, the switch will be nearly imperceptible to the user.

Because the data commands are time sensitive in the digital embodiments, they are sent from the headend via a command data PID (Packet Identification). The commands must be synchronized with video GOP's at the encoder end. In order to accomplish this, the data codes computer 316, shown in Figure 5, sends individual commands as a whole packet. Each command may consist of as few as two bytes. Therefore, the generator pads the rest of the packet with code FF (hex) bytes. When this whole packet is sent to the encoder 312, the encoder 312 will transmit it at its earliest convenience. If a partial packet is sent to the encoder 312, the encoder 2312 does not send the command until subsequent commands fill the remainder of the packet.

The commands, as identified in (1) ACTV Coding Language, Educational Command Set, Version 1.1, and (2) ACTV Coding Language, Entertainment Command Extensions, Version 2.0, are formed by stringing together two to six byte long commands. The command data is presented to the encoder's ISO interface and packet stuffed to ensure timely transmittal of the command data.

The control program is preferably stored in RAM 352. The processor 360 receives instructions from the control program. Further, key inputs such as user responses, personal profile information as well as control messages are used by the processor 360 in making switching decisions.

Preferably, the control program operates in five modes as determined by the received interactive command messages. The five modes are as follows:
- Switch Audio and/or Video Based on User Input
- Switch Audio based on User Input and stored data
- Switch Audio and/or Video based on User Input and stored data
- Switch Audio and/or Video based on Control Messages
- Switch Audio and/or Video based on Control Messages and stored previous input.

Multiple modes may be used by the program simultaneously.

The first mode above, switch audio and video channels, is the simplest mode of operation. The control program is commanded by the microprocessor 360 to accept one of the four remote input key codes and to switch to the corresponding audio/video channel. The program performs this switch on the video frame boundary at the end of the current GOP. Once the new channel is displayed, the control program has the capability to update the on-screen display with new text and/or graphics message either received in the datastream from the headend or stored locally.

The second mode above, display one video channel and switch audio channels, continuously displays a single video channel. When a remote input key code is received, the video continues but the audio channel is switched on the appropriate audio frame boundary. As mentioned above, the appropriate audio frame boundary is determined by examining the splice point counter value in the adaptation field. The choice made by the user is stored in a RAM register. Any time a choice is made by the user, the key code and the previously stored choices are reviewed by the control program to determine the next audio channel.

The third mode identified above, switch audio/video channels based on user and previous choices, displays an initial audio/video channel. When commanded by the command message stream, text is displayed on the on-screen display. The control program then waits for a user input. When the user input is received, it is stored in a RAM register along with previous user choices. The register is examined by the control program and then, based on stored logic, determines the next audio/video channel to be displayed.

The fourth mode identified above, switch audio/video channels based on control messages, also displays an initial audio/video channel. The control program then waits for a control input from the control message stream. When the control message input is received, it is stored in a RAM register along with the previous user and control message choices. The register is then examined by the control program to determine the next audio/video channel to be displayed.

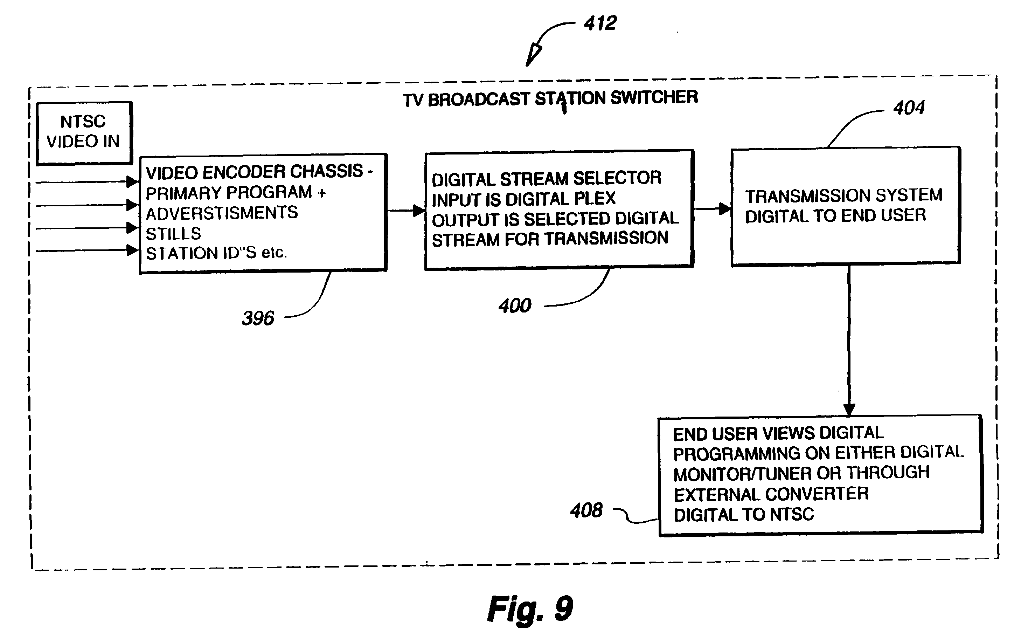

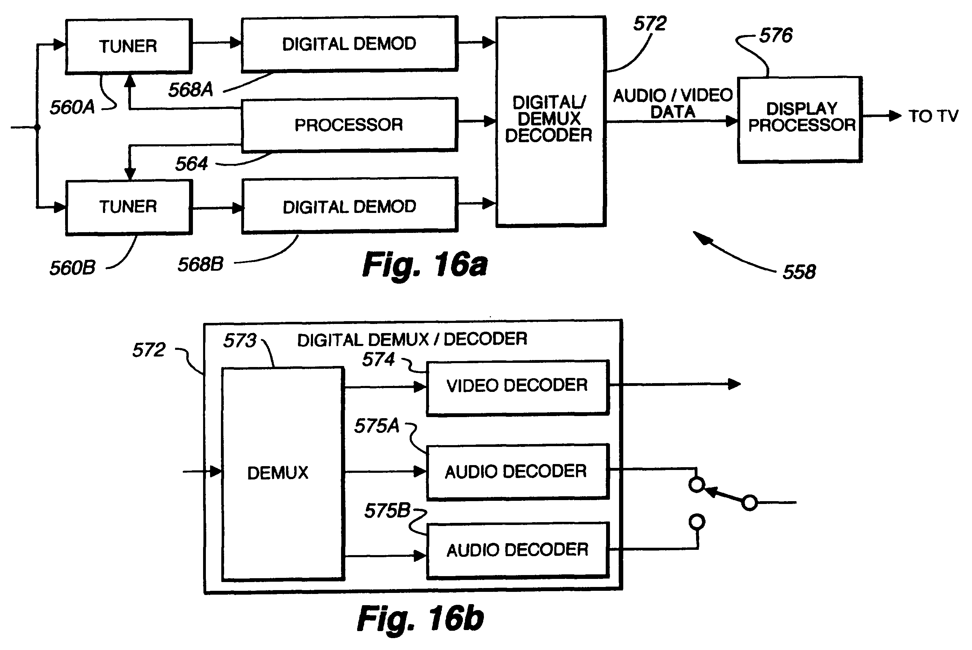

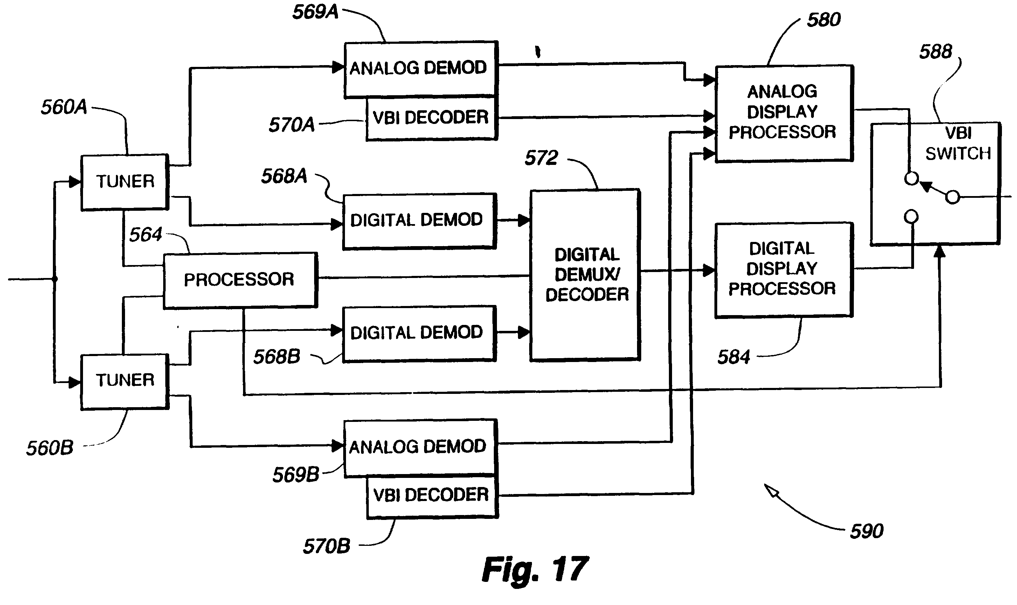

There will now be described several applications of the digital embodiments described above with reference to Figures 1 to 8 and of the two tuner embodiments, described below, with reference to Figures 16 and 17. These applications are illustrated in Figures 9 to 14.

As indicated in Figure 9 which illustrates a TV broadcast station switcher 412, the seamless switch from one signal to another signal is performed at a TV broadcast control center and forwarded to users' digital reception sets 408. At the headend 396, several digital programs are combined in accordance with any of the methods described.

Upon receipt of the programs by the broadcast station, the signals are fed into a digital stream selector 400. This selector comprises the elements discussed above in any of the alternative embodiments for performing a seamless switch (Figure 1-4, 7, 15-17), except for the fact that this unit is not located at the remote sites. The unit works in the same manner as discussed above. Regardless of whether the digital stream selector 400 selects amongst multiplexed signals in one datastream on one channel, centred on a certain frequency, or between signals in different datastreams, or from a received signal to a locally inserted ad, all such switches are seamless in the embodiment shown in Figure 9. The selections may be made as a function of station prerogative, remote user selections and/or personal profile information (transmitted to the TV station via a backchannel), or targeted advertising.

Once a selection is made the program signal is transmitted by any required means 404 to the remote sites 408 for presentation.

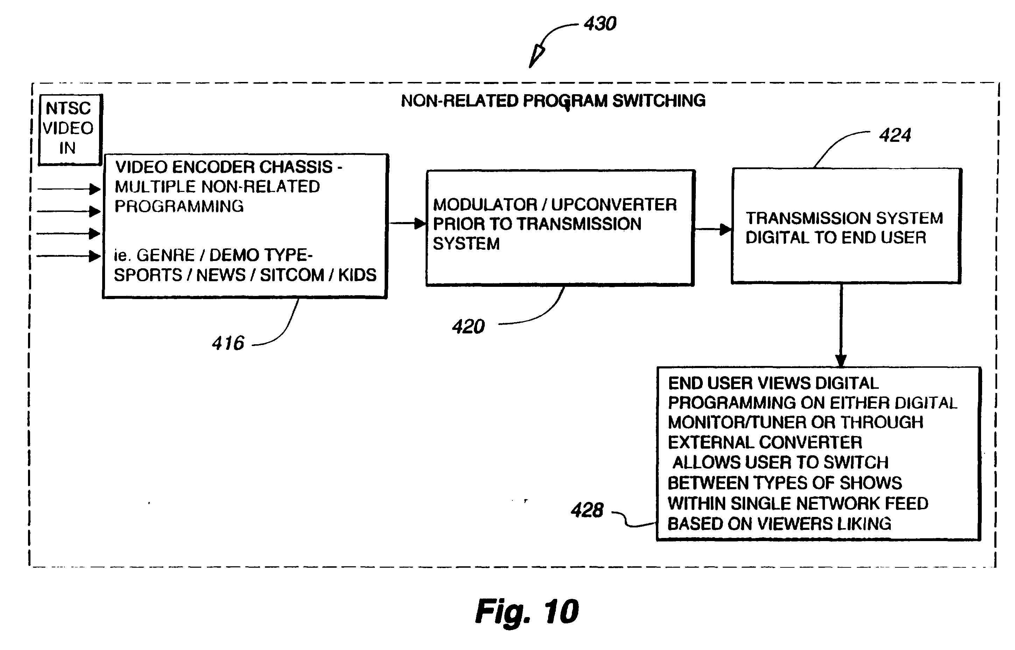

Figure 10 illustrates non-related program switching 430 for switching between non-related programs. In other words, this is simply switching from one TV channel to the next TV channel. Presently, switching from one signal to another cannot be accomplished without flicker in the digital environment.

With the invention, a viewer may switch from one program to another program, whether related or unrelated, and the transition will be seamless. In other words, there will be no visible artifacts present in switching from one program to another program.

If the programs are compressed and multiplexed within one MPEG stream, any of the embodiments disclosed herein are capable of performing the seamless switch. If the programs are in separate NTSC channels, one of the digital "two tuner" embodiments (Figures 4, 16 and 17) may be used to allow for the frequency shift.

The high level elements of the system 430 for non-related program switching are shown in Figure 10. Preferably, the non-related programming is compressed and multiplexed using an MPEG stream into one datastream using one NTSC channel at a video encoder chassis 416. Non-related programming can be combined into one MPEG stream or can be in directed into different NTSC channels. For example, programming may consist of sports, news, sitcom or children's programming. These programs are modulated at a modulator/upconverter 420 and transmitted across any suitable transmission means 429 as discussed above.

End users are able to view digital programming on either a digital monitor/tuner, a personal computer or through an external converter 428, connected to an analog television set, in which case the seamless switch is performed in the converter. Any of these various components allows a user to "surf" channels based on a viewer's preferences. Again, the reception unit may be selected from any of the alternatives explained in Figures 1-4, 7, 15-17.

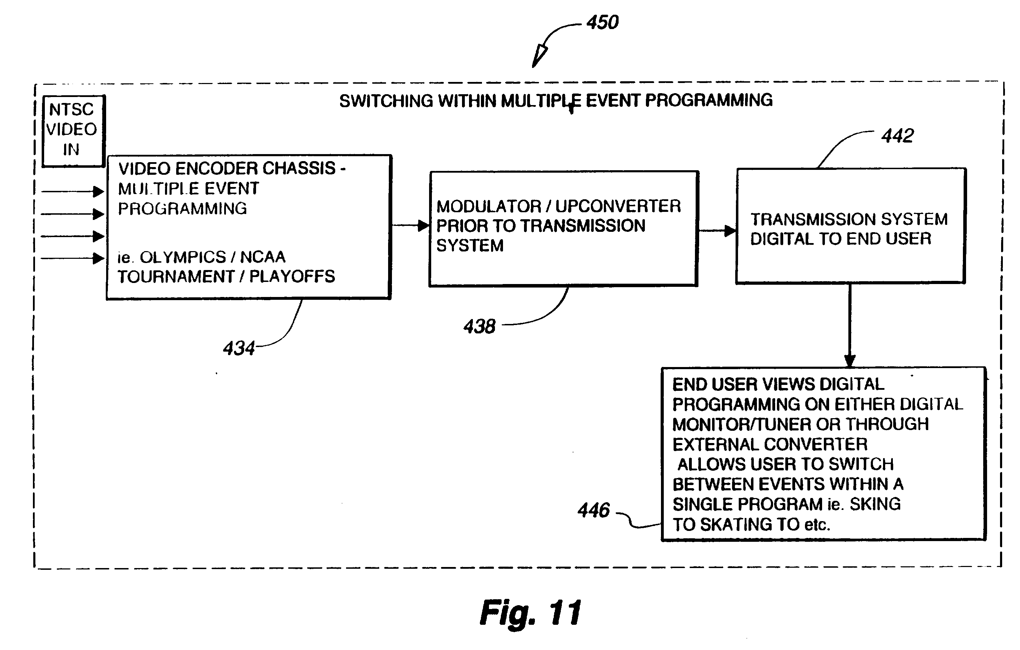

Seamless switching within multiple event programming 450 is illustrated in Figure 11. In this application, the system 450 allows a user to switch between separate events within a single program. For example, an Olympics broadcast may simultaneously comprise several programs corresponding to different events, e.g. skiing, speed skating, figure skating, ski jumping etc. Preferably, these separate event programs are compressed and multiplexed into one MPEG digital stream at the video encoder chassis 434, pass through the modulator/up converter 438, and are transmitted as a single NTSC signal via the transmission means 442. These event programs, however, may also be encoded at the broadcast center onto separate NTSC channels.

After modulation and subsequent transmission, these programs are received at the remote sites 446. The remote sites 446 include a reception unit, which contains either a digital monitor/tuner, a personal computer, or a external digital converter connected to a monitor. The user may select between the different programming events via the remote control device. When the user desires to switch to another event program, the switch will be performed seamlessly by any of the methods and systems described above (Figures 1-4, 7, 15-17).

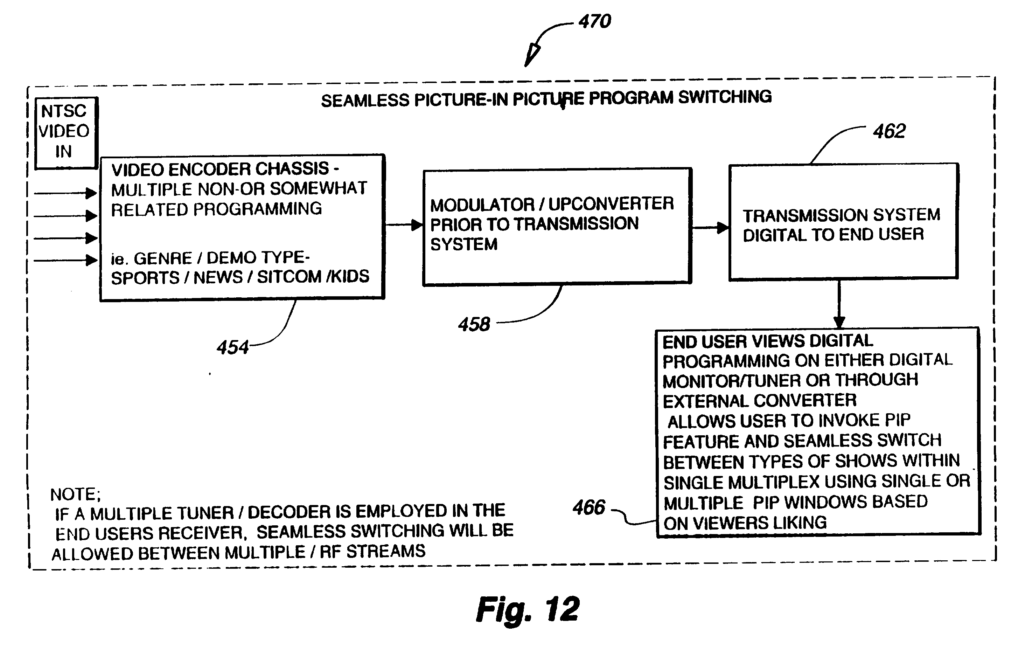

Seamless picture-in-picture program switching 470 is illustrated in Figure 12 and provides for switching between non-related or related programs using "picture-in-picture". Regardless of whether the user is switching between programs in the small framed display or the large framed display, all such switches are seamless.

The viewer may switch from one program to another program in either of the two displayed windows. In other words, there will be no visible artifacts present in switching from one program to another program.

The high level elements of the system for picture-in-picture program switching 470 are shown in Figure 12. Preferably, four to seven programs are compressed and multiplexed into an MPEG stream into one datastream on one NTSC channel at the video encoder chassis 454. Other programs are combined into other MPEG datastreams at the video encoder chassis 454. For example, programming may consist of sports, news, sitcom or children's programming. These programs are modulated and transmitted across any suitable transmission means 462, as discussed above.

End users are able to view digital programming on either a digital monitor/tuner, a personal computer or through an external converter 466, connected to an analog television set, in which case the seamless switch may be performed in the converter. The embodiment and flow disclosed in Figure 12 allows a user to invoke the picture-in-picture feature and seamlessly switch between different programs within a single MPEG stream. If switching from one MPEG multiplexed stream to another is desired, the converter, PC or digital monitor/tuner 466 will require the employment of a multiple tuner/decoder, examples of which are shown in Figures 4, 16 and 17.

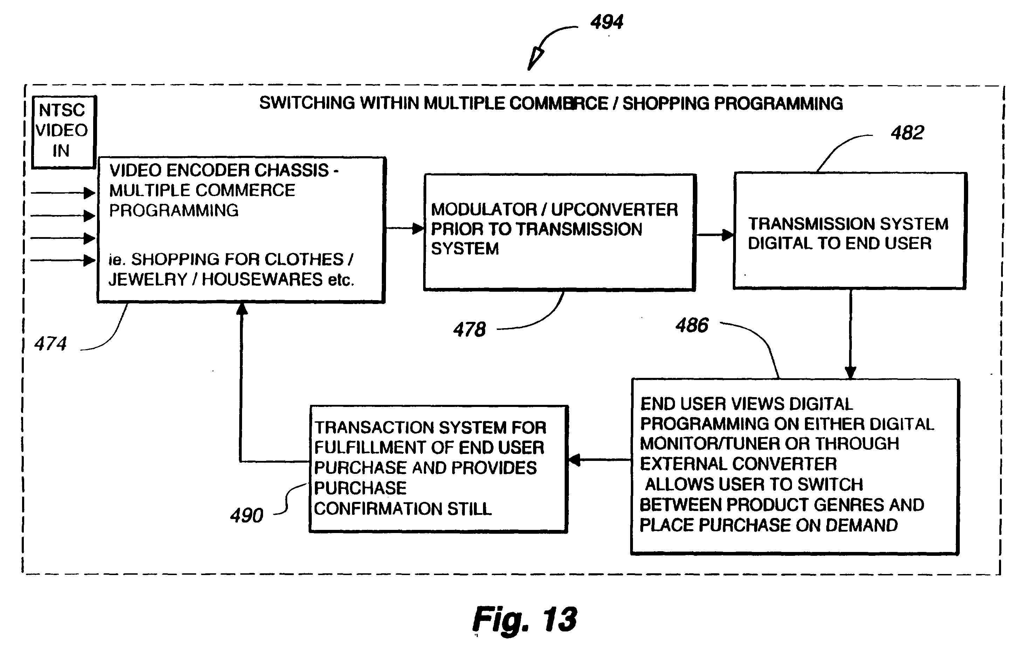

Switching within multiple commerce/shopping programming 494 involves a transaction based system with return paths, and is indicated in Figure 13. As with the other embodiments discussed above, a video encoder 474 compresses and multiplexes several different programs onto one or more NTSC channels for transmission to the remote sites.

Preferably, several different types of shopping programs are compressed and multiplexed onto a single NTSC channel. For example, separate programs may be directed at clothes, jewellery, housewares, etc. If more programs are necessary than allowable on a single NTSC channel, more than one NTSC channel may be utilized.

The programs are transmitted to the end user reception units 486, as shown in Figure 13, over any suitable transmission means 482. At the reception units 486, the user may seamlessly switch between different product genres. Alternatively, the reception unit 486 can switch to certain product programming based on personal profile or demographic information. In this manner, only those products which most closely match or suit a particular individual's interests and desires will be presented to the user. Such data can be stored in either storage in the reception unit 486 or at the headend.

If the user determines to purchase or to receive additional information regarding a product, a backchannel 490, such as that shown in Figure 10, may be used to transmit such requests back to the central location.

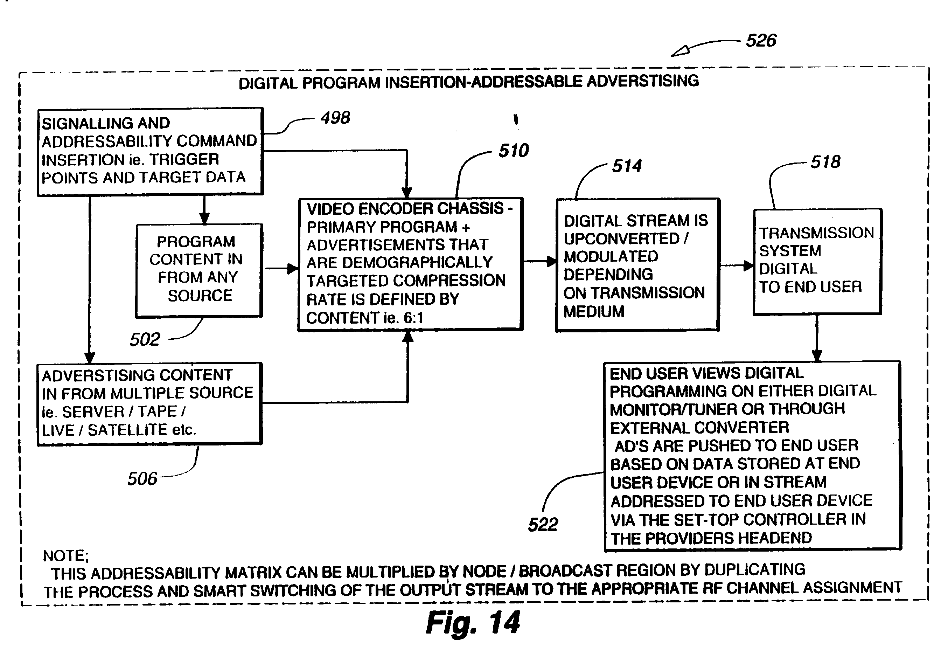

Figure 14 discloses a digital program insertion - addressable advertising application 526 providing digital program insertion. At certain predetermined times during the programming, certain advertisements are displayed to the viewer. These advertisements are preferably individualized to the particular viewer based on personal profile information or demographic information. Such targeted advertising is described in the following paragraphs.

At the central location, a plurality of advertisements is inserted into the programming stream. Preferably, the central location uses a hybrid digital insertion system for insertion of the advertisements into the programming. Hybrid digital equipment replaces the tape decks of the analog system with computers, disk drives and decoder cards, as set forth in the CableLabs Cable Advertising White Paper. The advertising content 506 may originate from any one of a number of possible sources, including, but not limited to, server, tape decks, satellite feed. For storage, preferably the spots are digitally encoded and compressed in an off-line process, using MPEG1, MPEG1.5, MPEG2, or a proprietary method. Distribution from the encoder to the server and to the playback systems can be done through a network or by disk or tape.

After encoding, the spots are distributed to a server for storage until required for playback. Preferably, a spot can be played directly from the server to a decoder card, for conversion back to analog. The spot is converted to analog, then sent through the insertion switcher in the conventional manner. The output video and audio may then be forwarded to the audio and video encoder shown in the central site configuration in Figure 5, after which the spots are digitally encoded and compressed as described above, with reference to Figure 5.

Although not as efficient as digital advertising insertion, the actual switching of the advertising into the programming can also be accomplished with known advertising insertion systems, using analog or tape based systems.

The placement and display of advertisements into the programming stream are controlled through the use of signalling and addressability command insertion 498. Personalized advertising may be effectuated by addressing certain advertisements for certain viewers. For example, a certain car company wants to individualize its commercial to best meet the needs and desires of the viewer. If it is known that a particular user is male and enjoys outdoor activities, the programmer may want to show the advertisement corresponding to the car company's Sports Utility Vehicle as opposed to a small economy car. The advertisements can be pushed to the end user based on data stored at the remote end user unit or in the stream addressed to the end users device via the set-top controller in the provider's headend.

Preferably, several advertising options are encoded as described above. Because the advertising spot videos are genlocked and time synched at the encoder 510, switching from the main programming to one of the advertisements will appear seamless to the viewer.

As opposed to switching from a single digital signal to another single digital signal at the remote reception units, a seamless transition from one group of signals to another group of signals may be provided. The transition should take place such that the output bitstream is continuous and correct to the MPEG syntax. Proper switching ensures that any standard MPEG decoder plays the resulting bitstream as if it were a stream with no errors.

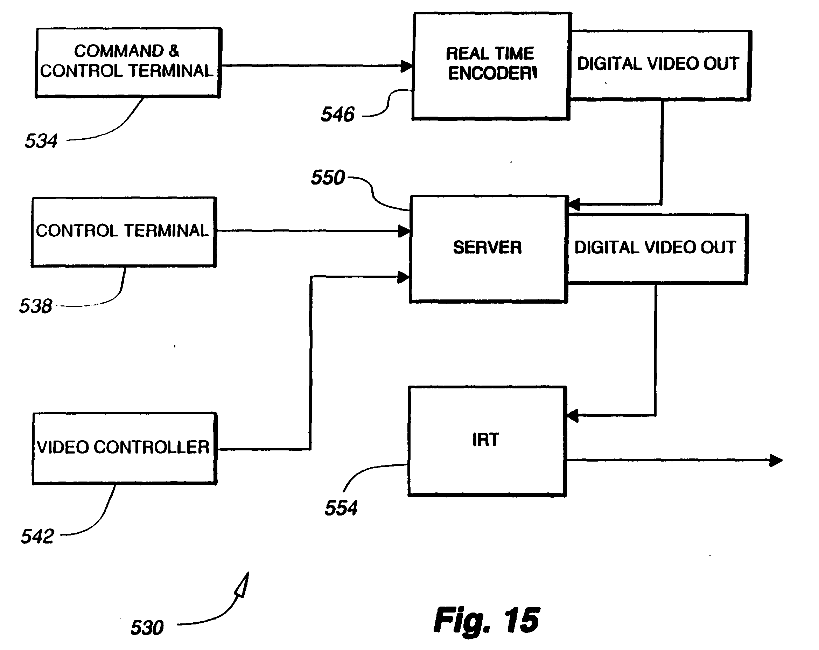

A system 530 for performing this switch is shown in Figure 15. The elements of Figure 15 may be located at a cable headend or alternatively, at a centralized op center for a satellite distribution network. For purposes of explanation, a group of live signals are denoted as the Group A signals, and Group B signals are stored, prerecorded signals, for example, stored at the server 550. For example, the Group A signals may comprise several videos representing different camera angles at a sporting event. The Group B signals may represent a series of commercials. It will be understood, however, that both the Group A and/or Group B signals may represent either prerecorded or live signals.

In this embodiment, it is desired to switch from the Group A signals to the Group B signals. The Group A signals are received at the server 550 from a real time encoder 546, located either locally or at a remote site. A specialized MPEG digital packet is inserted into the Group A content stream on a specific channel. A command and control terminal 534 provides an analog tone in the video signals prior to analog-to-digital conversion. Once the signals reach the real time encoder 546 from the command and control terminal 534, the real time encoder 546 inserts a digital tone at the appropriate point in the Group A digital stream upon detection of the analog tone. Once the tone is inserted, the Group A digital stream is output from the real time encoder 546 and forwarded to the server 550 at the headend. Once received at the server, the Group A stream is forwarded to an MPEG transport switch device in the server 550. The control terminal 538 sends a command to the MPEG transport server switch device to cause the switch to begin looking for the inserted digital tone.

In order to play back the Group B content, the server switch device must decode timing information from the Group A digital stream and subsequently, restamp the Group B content with the appropriate timing signals from Group A. Preferably, this is accomplished by genlocking to the PCR's videostream, preferably the same stream with the digital tone embedded therein, and stripping the program clock reference (PCR) out of the videostream to recreate the encode clock of the original Group A content. At this point, the switch device has the ability to re-insert the timing information into the Group B content to prepare it for playout.

Upon detection of the digital tone, the server switch device initiates a transition to the Group B digital stream, comprised of the Group B prerecorded signals. Preferably, the server switch device has prior knowledge of the length of the Group B content and, therefore, when the server switch device senses the end of the Group B content, it switches back to the Group A content. The resulting digital stream output from the server to the transmitter comprises both Group A and Group B content. The transmitter 554 forwards the digital data stream to the remote reception sites, as previously described.

In this manner, at certain times during the presentation of a sporting event, represented via the plurality of live digital video signals (i.e., the Group A content), for example, the received videostream at the receive converter units will automatically transition to the Group B prerecorded content based on the action by the server switch device, for example. The decoder at the reception sites then selects one of the advertisements in the Group B content, as previously described. At the end of the advertisements, the decoder automatically begins receiving the Group A content again and selects one of the live signals, as previously described. In this manner, a seamless switch from live encoded video content to prerecorded content is effectuated at the server.

A two tuner apparatus 558 for providing seamless switching from a digital signal located in one frequency channel (hereinafter, "Channel A") to another digital signal located in another frequency channel (hereinafter "Channel B") is shown in Figures 16a and 16b.

As shown in Figures 16a and 16b, apparatus 558 comprises two tuners 560A, 560B, for tuning to separate frequency channels, a processor 564 for selecting the frequency channels and digital signals embedded therein, digital demodulators 568A, 568B for demodulating the signals from the carrier, a digital demux/decoder 572 for stripping out the selected audio, video and data of the selected content from the composite digital stream, and a display processor 576 for formatting the video signal for display.

The apparatus 558 operates to switch from one digital data stream in Channel A to another digital data stream in channel B as follows. The first tuner 560A is tuned to Channel A and receives a composite digital stream, preferably comprising a plurality of digital video, audio and/or data signals, in the associated frequency channel. The composite digital stream is passed from the first tuner 560A to the associated digital modulator 568A. The type of demodulation can be any known in the art, such as those described above.

The composite digital stream is then directed to the input of the digital demux/decoder 572, shown in Figure 16b, in which the selected audio and video signals are stripped from the composite digital stream in a demux 573 and forwarded to respective audio and video decoders 575 and 574. Those signals are then decompressed and decoded based on the signal encoding scheme, preferably one of the MPEG schemes. Once decoded, the audio and video (and/or data, if appropriate) are forwarded to the display processor 576 and subsequently to the monitor.

Once a decision is made to switch to another digital signal in frequency Channel B, the processor 564 sends a command to the second tuner 560B to pretune to the Channel B frequency. The composite digital stream in Channel B is passed through the associated digital demodulator 568B and forwarded to the digital demux/decoder 572. At this time, the digital demultiplexer 572 receives both the digital streams located on Channels A and Channel B. Thus, if both Channel A and Channel B carried four digital signals, the demultiplexer 572 receives eight digital signals. The digital demultiplexer 572 receives a command from the processor 564 indicating which of the digital signals to strip out from the composite digital stream from Channel B. Separately, the digital demultiplexer 572 strips out the selected video and audio (and/or data) signals from the composite digital streams from Channels A and B. The selected signals are forwarded to the video and audio decoders 574, 575. The video decoder 574 switches from the currently displayed video signal to the newly selected video signal as described above with reference to Figures 6 and 7. Thus, the decoder 574 identifies the splice point in the present stream. Once the decoder 574 detects the splice point, it determines that it is the appropriate time to switch to the second stream. The decoder 574 begins loading the second stream into the buffer and a seamless switch is effectuated because of the time gap in the first stream. Once the second stream is output from the decoder, it is forwarded to the display processor 576, where the video signal is formatted for display.

The audio decoder 575 performs the switch from the present audio stream to the second audio stream, in the same manner as described above with reference to Figure 11. Once the switch is completed, the second audio stream is forwarded to the display processor 576.

A two tuner apparatus 590 for switching from an analog signal located in a first RF channel to a digitally compressed signal in a second RF channel or vice versa is shown in Figure 17. In this embodiment, a viewer watching a particular channel, whether it be an analog or a digital signal, in one specific RF frequency, decides to switch to another channel, whether it be analog or digital, in a different RF frequency. Two tuners 560A, 560B are used to transition from one RF frequency to a different RF frequency.

Assuming, by way of example, that the viewer is currently watching a channel (Channel A) with an analog signal and decides to switch to a digitally compressed signal in a different channel (Channel B), the apparatus 590 operates as follows. With respect to the analog signal, one of the tuners 560A tunes to the RF frequency associated with Channel A. Because the channel carries an analog signal, the tuner 560A directs the signal to the analog demodulator 569A and VBI decoder 570A. The analog demodulator 569A demodulates the analog signal using any appropriate analog demodulation scheme. The VBI decoder 570A strips out any information (e.g., interactive commands, close captioning) embedded in the vertical blanking interval (VBI). The demodulated analog signal is then forwarded to the analog display processor 580, which formats the analog signal, and outputs it to the VBI switch 588 and a display device.

If a decision is made to switch to a channel containing muxed and compressed digital signals, the microprocessor 564 determines the RF frequency location of this channel and forwards the information in a command to the second tuner 560B. Upon receipt of the command, the second tuner 560B pre-tunes to the indicated second RF frequency (Channel B). The output of the Channel B is forwarded to the input of the digital demodulator 568B, which demodulates the signal using an appropriate digital demodulation scheme. The digital data stream is output from the demodulator 568B and received at the digital demux/decoder 572. The microprocessor 564 sends a command to the digital demux/decoder 572 indicating the selected digital signal. The digital demux/decoder 572 demultiplexes the plurality of digital signals and decompresses such signals. The resulting selected constituent parts (audio, video and data) are then forwarded to the appropriate decoders 574, 575 (see Fig. 16b), as described above with reference to Figure 16, whereby the video decoder 574 begins to decode the video information and sends a signal to the microprocessor 564 signalling that the stream was property decoded and that the audio was in lip synchronization.

The video and audio signals are then forwarded to the digital display processor 584, where the signals are converted from digital to analog. The resultant analog signals corresponding to Channel B are then input into the VBI switch 588. Upon command from the microprocessor 564 to switch the two videos, the VBI switch 588 switches during the appropriate time during the vertical blanking interval, resulting in a switch from the analog to the digital channel.

If it desired to switch from a digital channel to an analog channel, the process identified above is reversed and the second tuner 560B pre-tunes to the analog channel. Further, the embodiment shown in Figure 17 can switch from analog to analog channels.

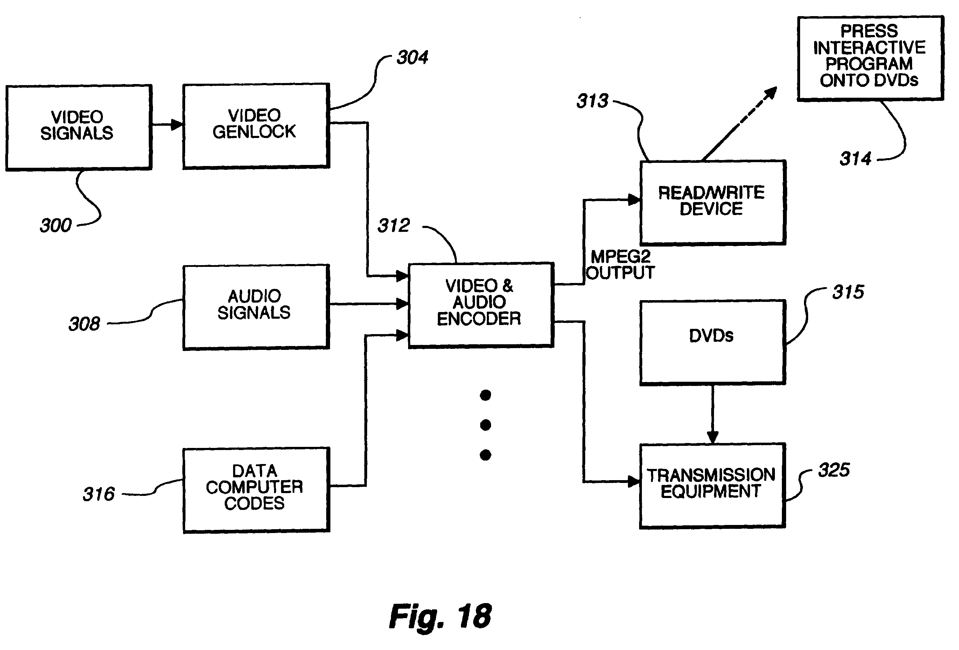

Figure 18 shows an embodiment of the invention in which live or pre-recorded programs are converted to DVD, for example, at the time of production or in subsequent edit editions at a central location, for later playback. The DVDs with embedded programs may be sold by distributors to consumers for home use. Because the DVD would preferably contain the ACTV control codes, any type of receiver station with interactive embedded software as described herein would be able to play back locally a program off the DVD.

The process of pressing a live or pre-recorded program is preferably performed at a central location, as indicated in Figure 18. The elements and procedure for developing the program are substantially the same as described with reference to Figure 5: the difference being the pressing of the program onto DVD.

Figure 18 indicates a plurality of video signals 300 which may comprise live or prerecorded video streams. The video signals may have originated from cameras (for live video), video servers, video tape decks, DVD, satellite feed, etc. The video signals may be in MPEG format, HDTV, PAL, etc. A plurality of audio signals 308 may originate from CD, tape, microphones, etc. Further, data comprising graphics signals and/or html/web site link addresses may be input into the video and audio encoder 312.

The data codes, shown emanating from the data code computer 316 in Figure 18, are the interactive commands for interactive processing used by the set top converter, as discussed above. Preferably, the data codes are part of an interactive scripting language, such as the ACTV scripting language, originating in a coding computer 316. The data codes are also forwarded to the encoder 312. These data codes facilitate the multiple interactive programming options at the reception units; A data channel is provided for enabling a synchronous switch between a first video stream and a second video stream. This data channel comprises the codes which link together the different program elements and information segments on the different video signals.

The plurality of video signals 300 are genlocked in the video genlock device 304 and thus, time synchronized. The time synchronized video signals are directed into the video and audio encoder 312. In the preferred embodiment, compatible encoders 312 are required at the cable headend to work with the digital reception units at the remote sites. As discussed above with reference to Figure 5, the interactive applications are preferably facilitated by synchronizing the commands at the headend to a specific video frame and a specific audio frame. This level of synchronization is achievable within the syntax of the MPEG-2, 4 or 7 specifications. Further, the video encoders 312 are preferably time synchronized, as discussed above with reference to Figure 5.

As discussed with reference to Figure 5, multiple video signals 300, data codes 316 and audio signals 308 are input into the encoder 312. In the preferred embodiment, four video channels are input into the encoder 312. However, more or less video streams may be input based on the content that is to be delivered. Preferably, the encoder 312 uses a standard MPEG-2 compression format. However, MPEG-4 and MPEG-7 as well as other compression formats, such as wavletts and fractles could be utilized for compression. These techniques are compatible with the existing ATSC and DVB standards for digital video systems. Certain modifications, however, are made to the MPEG stream in order to facilitate the preferred seamless switching at the set top box. These modification to the encoding scheme are described above with reference to Figures 5 and 6.

At the output of the encoder 312, the composite signal is directed to transmission equipment 325 for transmission to a receiver station and/or is directed to a DVD production suite. Prior to DVD production, the compressed program may be stored on tape or other medium 313 and then sent to a DVD production facility 314 for pressing the program onto DVD medium by appropriate means to appropriate standards.

Once the program has been converted and stored on one or more DVDs, the DVD can be played back at a central location (such as a cable headend) and the compressed interactive program comprising multiple audio, video, Html/web links, control codes and/or graphics signals stored thereon can be transmitted over any of the transmission means to any of the receiver stations disclosed herein. The composite interactive signal on DVD is output from the DVD player 315 and transmitted over any suitable transmission means via the transmission equipment 325.

The interactive program carried by the DVD may be any of the types of programs described above, including recorded live sporting events (with alternative camera angles, closeups, relays, slow motion video, graphics with player statistics, etc.), interactive movies, games, etc.

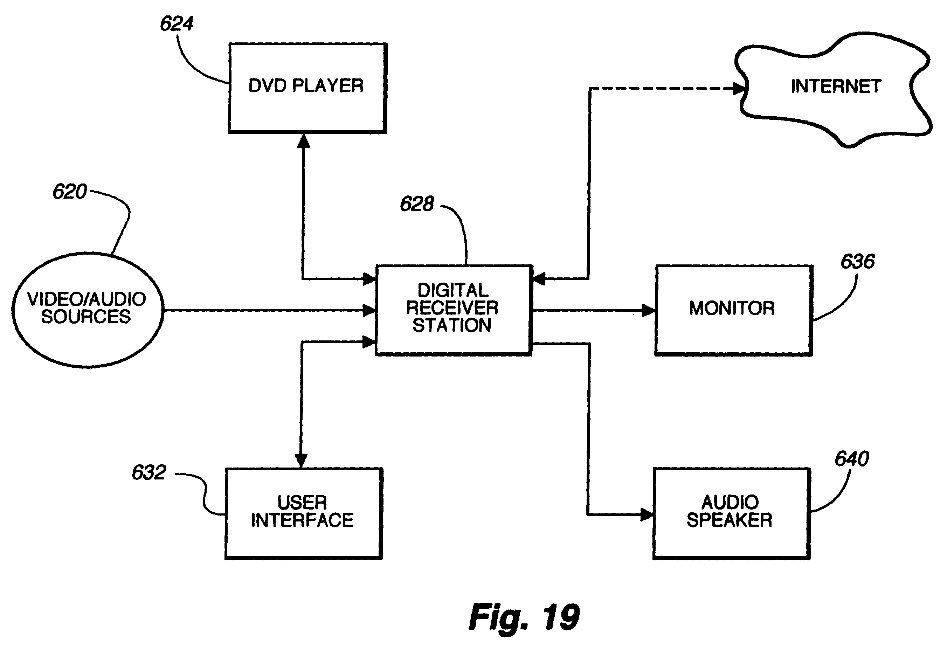

Additionally and/or alternatively, DVDs carrying the programming may be sent to users and played-back locally, as shown in Figure 19. In this embodiment, the ACTV control commands are ported to auto-convert to those of a DVD specification. A secondary data/command stream may be sent to the DVD production facility for later use as the digital file master sent to a DVD pressing house for distribution. In this manner, the resultant DVDs sold or otherwise distributed to consumers will prevent the ACTV methodology from being played over distribution networks.

In the system shown in Figure 19, the interactive receiver station may be any of the receiver stations described above with reference to Figures 3, 4, 7, 16 and 17. In this embodiment, however, the interactive program is stored on a DVD. The receiver station 628 may be a digital television, a digital cable box with connection to a television, a computer, etc. The receiver station 628 is operably connected to a DVD player 624. In this embodiment, seamless branching is preferably provided amongst the different MPEG encoded video signals stored on the DVD. Further, additional interactive elements may be stored on the DVD including, graphics, still images, links to Web pages, audio segments. A controller of the receiver station 628 initiates the interactive program by sending a command to the DVD player 624. Preferably, the DVD player 624 forwards the MPEG encoded program to the receiver station 628 which separates the video, audio and data channels as described above with reference to Figure 7. Alternatively, the DVD player 624 may perform the selection of the appropriate video/audio/graphics for display and forward to the digital receiver station 628 only the selected streams.

The controller reads the ACTV commands and selects interactive segments for display and audio play, as discussed above, based on the interactive commands it receives and user inputs and/or a personal profile stored either in the digital receiver station or external to the digital receiver station, including at a central location. Based on the commands, it plays the appropriate input from the DVD Player 624 and/or other indicated sources, e.g. the Internet. One or more of the commands may direct the controller to access information segments from an Internet source. Such Internet information segments may include graphics, text, audio and video clips. In this manner, information segments from the Internet may be integrated with the interactive program, for example, as described in U.S. Patents Nos. 5,778,181 and 5,774,664.

It will be appreciated that whilst the digital versatile disc, DVD, is currently the preferred format of optical disc for storing the video, audio and data content to provide interactive programming, other optical disc formats, such as CD-ROM, may be used.

It will also be appreciated that other modifications and variations may be made to the embodiments as described and illustrated within the scope of the present application as defined in the following claims.

## Claims

1. A method of providing digital programming at a receiver station, where a plurality of video signals are stored on an optical disc, the method comprising the steps of:
displaying a first video signal;
selecting a second, stored video signal from the optical disc; and
in response to the selection, receiving and displaying the second stored video signal, wherein the transition between the first and second video signals is seamless.

2. A method as claimed in Claim 1, wherein the first video signal is stored on the optical disc.

3. A method as claimed in Claim 2, wherein the video signals are stored on the optical disc together with data codes for enabling the seamless switch between the first and second video signals received from the optical disc.

4. A method as claimed in any preceding claim, wherein video signals are stored on said optical disc in a digital program stream, and time gaps are created in each of the stored video signals, the time gaps representing switch times and providing time for a seamless switch from one video signal to another.

5. A method as claimed in any preceding claim, wherein the optical disc is at a location remote from the receiver station, and the method further comprising the step of transmitting video signals stored on said optical disc to the receiving station.

6. A method as claimed in any of Claims 1 to 4, wherein the optical disc is located at the receiver station, and the method further comprising the step of reading the optical disc to retrieve video signals stored thereon.

7. A method as claimed in any preceding claim, further comprising the steps of:
indicating to a user programming options available; and
selecting a programming option in response to user selection.

8. A method as claimed in any preceding claim, wherein the plurality of video signals stored on the optical disc comprise at least one closeup video and at least one replay video.

9. A method as claimed in any preceding claim, further comprising the steps of:
creating a viewer profile; and
selecting said second, stored video signal based, at least in part, on the viewer profile created.

10. A method as claimed in any preceding claim, further comprising the steps of:
selecting at least one graphic segment from a plurality of graphics segments;
and receiving and displaying the selected graphic segment.

11. A method as claimed in Claim 10, wherein at least one of the graphics segments is stored on the optical disc.

12. A method as claimed in any preceding claim, further comprising the step of receiving one or more audio signals.

13. A method as claimed in Claim 12, wherein audio signals are stored on the optical disc.

14. A system for providing digital programming at a receiver station, the receiver station comprising:
receiving means for receiving video signals and converting the received video signals for display;
selection means for indicating a selected video signal to be displayed; and
display means for displaying the selected and converted video signal;
wherein the system further comprises an optical player for reading an optical disc on which a plurality of video signals are stored, the receiver station being arranged to receive and display video signals from an optical disc upon selection by said selection means,
and wherein the system is arranged such that the transition between first and second video signals displayed by said display means is seamless.

15. A system as claimed in Claim 14, wherein the video signals received from the optical disc each have time gaps therein, the time gaps representing switch times and providing time for a seamless switch from one video signal to another.

16. A system as claimed in Claim 14 or Claim 15, wherein said selection means comprises a processor, connected to the receiving means, and said receiver station further comprises a digital decompressor, operably connected to the processor, for decompressing received, compressed, video signals, wherein said display means is operably connected to the digital decompressor.

17. A system as claimed in any of Claims 14 to 16, wherein said optical disc player is at a location remote from the receiver station, and further comprising transmission means for transmitting video signals read from an optical disc to said receiving means at the receiver station.

18. A system as claimed in any of Claims 14 to 17, wherein said optical disc player is located at the receiver station.

19. A system as claimed in any of Claims 14 to 18, wherein the receiver station comprises a television set.

20. A system as claimed in any of Claims 14 to 18, wherein the receiver station comprises a personal computer with a television card.

21. A system as claimed in any of Claims 14 to 18, wherein the receiver station comprises a digital cable box and a television operably connected to the digital cable box.

22. A system as claimed in any of Claims 14 to 21, wherein said receiving means is arranged to receive and convert graphics segments for display by said display means.

23. A system as claimed in any of Claims 14 to 22, further comprising storage means arranged to store a viewer profile, and wherein said selection means is operable, at least in part, in response to the stored viewer profile.

24. A system as claimed in any of Claims 14 to 23, wherein said receiving means is arranged to receive audio signals and process them for reproduction by speaker means at the receiver station.

25. A system as claimed in Claim 24, further comprising means to synchronize a displayed video signal with the sound of an associated audio signal.

26. A method for preparing a plurality of video signals for seamless switching at subscriber reception sites, the method comprising the steps of:
receiving and genlocking a plurality of video signals to create time synchronized video signals;
directing the plurality of video signals into one or more video encoders;
inserting splice points into the plurality of video signals;
time synchronizing the plurality of video encoders, thereby ensuring that the splice points inserted in the video signals occur at a correct frame number; and
forming a digital program stream from the video signals such that time gaps are created in each of the video signals to enable switching from one video signal to another video signal in a seamless manner, the time gaps representing switch times and providing time for a seamless switch from one video signal to another,
and the method further comprising storing said digital program stream on at least one optical disc.

27. A method as claimed in Claim 26, wherein the step of forming the digital program stream comprises encoding the video signals at a tower bit rate than channel capacity to create the time gaps.

28. A method as claimed in Claim 26 or Claim 27, wherein a plurality of audio signals are associated with the plurality of video signals, the method further comprising the steps of receiving and encoding the plurality of audio signals.

29. A method as claimed in any of Claims 26 to 28, wherein the encoder receives a plurality of data computer codes, and the method further comprising the step of encoding the received plurality of data computer codes with the plurality of video signals.

30. An encoding system for preparing a plurality of video signals for seamless switching at subscriber reception sites, the system comprising:
at least one video genlock device, for receiving and genlocking the plurality of video signals to create time synchronized video signals;
at least one video encoder, connected to the video genlock device, for inserting splice points into the plurality of video signals. and for encoding the plurality of video signals to form a digital program stream, wherein the video encoders are time synchronized;
wherein the digital video signals are encoded to create time gaps in each of the video signals, the time gaps representing switch times thereby allowing time for a seamless switch from one video signal to another, and
means for preparing the digital program stream for storage on an optical disc.

31. A system as claimed in Claim 30, further comprising transmission means, operably connected to an optical disc player, for transmitting the plurality of digital program streams read from an optical disc onto a subscriber distribution network selected from the group consisting of cable television, broadcast television, and direct broadcast satellite.

32. A system as claimed in Claim 30 or Claim 31, wherein a plurality of audio signals are associated with the plurality of video signals, and the encoder receives and encodes the plurality of audio signals.

33. A system as claimed in any of Claims 30 to 32, wherein the encoder receives a plurality of data computer codes and encodes the data computer codes with the plurality of video signals.

34. A system as claimed in any of Claims 30 to 33, wherein at least one of the video signals comprises a regular television program signal.

35. A system as claimed in any of Claims 30 to 34, wherein at least two of the video signals comprises interactive program signals of an interactive program.

36. A system as claimed in any of Claims 30 to 35, wherein video signals of the plurality of video signals comprise one or more advertisements.

37. A system as claimed in any of Claims 30 to 36, wherein at least two of the plurality of video signals comprise different camera angles of the same event.

38. A system as claimed in any of Claims 30 to 37, wherein at least one of the video signals contains a close-up view of an event.
